# EUROPEAN PATENT APPLICATION

(11) **EP 3 751 269 A1**
(43) Date of publication of application: **16.12.2020**
(21) Application number: 18905656.7
(22) Date of filing: 12.12.2018
(51) Int. Cl.: G01N 27/62

(54) **SAMPLE SUPPORTING BODY, METHOD FOR IONIZING SAMPLE, AND MASS SPECTROMETRY METHOD**

(30) Priority: 09.02.2018 JP 2018021808; 09.02.2018 JP 2018021902; 30.07.2018 JP 2018142333
(71) Applicant: HAMAMATSU PHOTONICS K.K., Hamamatsu-shi, Shizuoka 435-8558 (JP)
(72) Inventor: TAKIMOTO Miu, Hamamatsu-shi, Shizuoka 435-8558 (JP); OHMURA Takayuki, Hamamatsu-shi, Shizuoka 435-8558 (JP); KOTANI Masahiro, Hamamatsu-shi, Shizuoka 435-8558 (JP)
(74) Representative: Grünecker Patent- und Rechtsanwälte PartG mbB
(86) International application number: PCT/JP2018/045700
(87) International publication number: WO 2019/155759

(57) **Abstract**

A sample support body is a sample support body for ionizing a sample, including: a first layer formed with a plurality of first through holes; a conductive layer provided not to block the first through hole on a surface of the first layer; and a second layer provided on the first layer on a side opposite to the conductive layer and formed with a plurality of second through holes, in which the plurality of first through holes and the plurality of second through holes extend in a thickness direction of the first layer and the second layer, each of the plurality of second through holes is communicated with one or more first through holes of the plurality of first through holes, a width of the first through hole is smaller than a width of the second through hole, and an opening rate of the first through hole is less than an opening rate of the second through hole.

## Description

### Technical Field

The present disclosure relates to a sample support body, a method for ionizing a sample, and a mass spectrometry method.

### Background Art

In the related art, a sample support body for ionizing a sample is known in mass spectrometry of a sample such as a biological sample (for example, refer to Patent Literature 1). Such a sample support body includes a substrate formed with a plurality of through holes opening to a first surface and a second surface on a side opposite to the first surface. In a case where the sample support body is disposed on the sample such that the second surface faces the sample, it is possible to lift up the sample from the second surface side of the substrate towards the first surface side through the through hole by using a capillary action. Then, in a case where the first surface side, for example, is irradiated with an energy ray such as laser beam, the sample moved to the first surface side is ionized.

### Citation List

### Patent Literature

Patent Literature 1: Japanese Patent No. 6093492

### Summary of Invention

### Technical Problem

In a case where the sample that is not in the shape of a thin film is subjected to the mass spectrometry as described above, it may be required that the sample support body is brought into contact with the sample, and then, is peeled off from the sample, and the sample support body is disposed on a stage or the like, and then, is irradiated with an energy ray. However, the substrate of the sample support body is extremely thin, and thus, when the sample support body is peeled off from the sample, there is a concern that the substrate is attached to the sample and is broken.

Therefore, an object of the present disclosure is to provide a sample support body, a method for ionizing a sample, and a mass spectrometry method in which a breakage is suppressed.

### Solution to Problem

A sample support body according to one aspect of the present disclosure is a sample support body for ionizing a sample, including: a first layer formed with a plurality of first through holes; a conductive layer provided not to block the first through hole on a surface of the first layer; and a second layer provided on the first layer on a side opposite to the conductive layer and formed with a plurality of second through holes, in which the plurality of first through holes and the plurality of second through holes extend in a thickness direction of the first layer and the second layer, each of the plurality of second through holes is communicated with one or more first through holes of the plurality of first through holes, a width of the first through hole is smaller than a width of the second through hole, and an opening rate of the first through hole is less than an opening rate of the second through hole.

The sample support body includes the first layer, the conductive layer provided on the surface of the first layer, and the second layer provided on the first layer on a side opposite to the conductive layer. Then, the plurality of first through holes extending in a thickness direction of the sample support body are formed on the first layer, and the plurality of second through holes that respectively extend in the thickness direction and are communicated with one or more first through holes are formed on the second layer. For this reason, for example, in a case where the sample support body is disposed on a sample such as a biological sample such that the surface of the second layer on a side opposite to the first layer faces the sample, it is possible to move the sample (a component of the sample) from the surface side of the second layer towards the first layer side through the second through hole. Then, it is possible to move the component of the sample from the second layer side of the first layer towards the surface side of the first layer through the first through hole by using a capillary action. Further, for example, in a case where the surface of the first layer is irradiated with an energy ray such as laser beam, energy is transmitted to the component of the sample that is moved to the surface side of the first layer via the conductive layer, and thus, the component of the sample can be ionized. In addition, as described above, the second layer is provided on the first layer on a side opposite to the conductive layer. Accordingly, the first layer is reinforced by the second layer, and thus, the breakage of the first layer when the sample support body is peeled off from the sample is suppressed. Accordingly, according to the sample support body, it is possible to suppress the breakage of the sample support body.

The sample support body may further include: a frame body provided on the first layer on a side opposite to the second layer and fixed to a peripheral portion of the first layer. In this case, it is possible to improve the handleability of the sample support body by the frame body.

The width of the first through hole may be 1 nm to 700 nm, and a thickness of the first layer may be 1 µm to 50 µm. In this case, it is possible to suitably attain the movement of the component of the sample according to the capillary action described above.

The width of the second through hole may be 1 µm to 1000 µm, and a thickness of the second layer may be 1 µm to 3000 µm. In this case, as described above, it is possible to suitably make the movement of the sample (the component of the sample) from the surface side of the second layer on a side opposite to the first layer towards the first layer side through the second through hole and the reinforcement of the first layer with the second layer compatible.

The first layer and the second layer may be formed separately from each other. In this case, the first layer and the second layer are provided separately from each other, and thus, it is possible to improve a freedom degree of the combination of the first layer and the second layer.

The sample support body may further include: a fixing member that is provided on an outer peripheral portion of the first layer and the second layer and grips the first layer and the second layer. In this case, it is possible to detachably fix the first layer and the second layer by the fixing member. In addition, for example, the sample support body is peeled off from the sample, and then, the first layer is further peeled off from the second layer, and thus, the surface of the first layer can be irradiated with an energy ray such as laser beam. That is, a freedom degree of the use of the sample support body is improved.

The sample support body may further include: an adhesive layer that is provided between the first layer and the second layer and joins the first layer and the second layer. In this case, it is possible to more reliably fix the first layer and the second layer.

The first layer and the second layer may be integrally formed of an identical material. In this case, the structure of the sample support body is simplified.

The material may be a anodized valve metal or anodized silicon. In this case, it is possible to easily obtain a structure in which the first layer and the second layer are integrally formed, by an anodizing process.

The first layer and the second layer may have flexibility. Even in a case where the sample includes a non-flat surface and it is difficult to irradiate the non-flat surface with an energy ray such as laser beam, it is possible to suitably ionize the component of the sample. Specifically, the sample support body is disposed on the sample such that the first layer and the second layer are along the surface of the sample, and thus, it is possible to move the component of the sample to the surface side of the first layer. Then, the sample support body is formed into a flat plate-like shape, and then, the surface of the first layer is irradiated with an energy ray such as laser beam, and thus, the component of the sample can be ionized.

The sample support body may have a curved shape. In this case, it is possible to move the component of the sample to the surface side of the first layer even in a case where the sample includes a non-flat surface.

A sample support body according to another aspect of the present disclosure is a sample support body for ionizing a sample, including: a first layer having conductivity formed with a plurality of first through holes; and a second layer provided on one side of the first layer and formed with a plurality of second through holes, in which the plurality of first through holes and the plurality of second through holes extend in a thickness direction of the first layer and the second layer, each of the plurality of second through holes is communicated with one or more first through holes of the plurality of first through holes, a width of the first through hole is smaller than a width of the second through hole, and an opening rate of the first through hole is less than an opening rate of the second through hole.

According to the sample support body, it is possible to omit the conductive layer and to obtain the same effects as those of the sample support body including the conductive layer described above.

The sample support body may further include: a third layer provided on the first layer on a side opposite to the second layer, the first layer and the second layer may have flexibility, and the third layer may be formed of a shape-memory material. There is a case where the sample includes a non-flat surface, and it is required to image a three-dimensional surface distribution of molecules configuring the sample. On the other hand, there is a case where it is difficult to irradiate the non-flat surface with an energy ray such as laser beam. In such a case, the sample support body is disposed on the sample such that the surface of the second layer on a side opposite to the first layer faces the sample and the sample support body is along the surface of the sample, and thus, it is possible to memorize a surface shape of the sample by the third layer while moving the component of the sample to the first layer on a side opposite to the second layer. Then, the third layer is peeled off from the first layer, and thus, it is possible to recognize the surface shape of the sample that is memorized by the third layer. In addition, the first layer and the second layer are formed into a flat plate-like shape, and then, the surface of the first layer on a side opposite to the second layer is irradiated with an energy ray such as laser beam, and thus, it is possible to ionize the component of the sample and to acquire a two-dimensional distribution of the component that is ionized. Then, it is possible to acquire a three-dimensional surface distribution of the ionized component by synthesizing the surface shape of the sample and the two-dimensional distribution of the ionized component.

A sample support body according to another aspect of the present disclosure is a sample support body for ionizing a sample, including: a first layer formed with a plurality of first through holes; a conductive layer provided not to block the first through hole on a surface of the first layer; and a second layer provided on the conductive layer and formed with a plurality of second through holes, in which the plurality of first through holes and the plurality of second through holes extend in a thickness direction of the first layer and the second layer, each of the plurality of second through holes is communicated with one or more first through holes of the plurality of first through holes, a width of the first through hole is smaller than a width of the second through hole, and an opening rate of the first through hole is less than an opening rate of the second through hole.

The sample support body includes the first layer, the conductive layer provided on the surface of the first layer, and the second layer provided on the conductive layer. Then, the plurality of first through holes extending in a thickness direction of the sample support body are formed on the first layer, and the plurality of second through holes that respectively extend in the thickness direction and are communicated with one or more first through holes are formed on the second layer. For this reason, for example, in a case where the sample support body is disposed on a sample such as a biological sample such that the surface of the first layer on a side opposite to the second layer faces the sample, it is possible to move the sample (a component of the sample) from the surface side of the first layer on a side opposite to the second layer towards the second layer side through the first through hole by using a capillary action. Further, for example, in a case where the surface of the first layer on the second layer side is irradiated with an energy ray such as laser beam, energy is transmitted to the component of the sample that is moved to the surface side of the first layer on the second layer side via the conductive layer, and thus, the component of the sample can be ionized. In addition, as described above, the second layer is provided on the conductive layer. Accordingly, the first layer is reinforced by the second layer, and thus, the breakage of the first layer when the sample support body is peeled off from the sample is suppressed. Accordingly, according to the sample support body, it is possible to suppress the breakage of the sample support body.

A method for ionizing a sample according to one aspect of the present disclosure, includes: a first step of preparing a sample and the sample support body including the conductive layer; a second step of disposing the sample support body on the sample such that a surface of the second layer on a side opposite to the first layer faces the sample; a third step of peeling off the sample support body from the sample; and a fourth step of ionizing a component of the sample by irradiating the surface of the first layer with an energy ray while applying a voltage to the conductive layer.

In the method for ionizing a sample, the sample support body includes the first layer, the conductive layer provided on the surface of the first layer, and the second layer provided on the first layer on a side opposite to the conductive layer. Then, the plurality of first through holes extending in the thickness direction of the sample support body are formed on the first layer, and the plurality of second through holes that respectively extend in the thickness direction and are communicated with one or more first through holes are formed on the second layer. In a case where the sample support body is disposed on the sample such that the surface of the second layer on a side opposite to the first layer faces the sample, the sample (the component of the sample) is moved from the surface side of the second layer towards the first layer side through the second through hole. Then, the component of the sample is moved from the second layer side of the first layer towards the surface side of the first layer through the first through hole. Further, in a case where the sample support body is peeled off from the sample, and then, the surface of the first layer is irradiated with an energy ray while a voltage is applied to the conductive layer, energy is transmitted to the component of the sample that is moved to the surface side of the first layer. Accordingly, the component of the sample is ionized. In the method for ionizing a sample, as described above, the second layer is provided on the first layer on a side opposite to the conductive layer. Accordingly, the first layer is reinforced by the second layer, and thus, the breakage of the first layer when the sample support body is peeled off from the sample is suppressed. Accordingly, according to the method for ionizing a sample, it is possible to suppress the breakage of the sample support body.

The first layer and the second layer may be formed separately from each other, and in the fourth step, the component of the sample may be ionized by irradiating the surface of the first layer with an energy ray while applying a voltage to the conductive layer, in a state in which the first layer and the second layer are fixed to each other. In this case, in the fourth step, the first layer is also suitably reinforced by the second layer.

The first layer and the second layer may be formed separately from each other, and in the third step, the first layer may be peeled off from the second layer, after the sample support body is peeled off from the sample. In this case, in the fourth step, it is possible to prevent the occurrence of a measurement noise due to the second layer.

The first layer and the second layer may be integrally formed of an identical material. In this case, the structure of the sample support body is simplified.

The material may be a anodized valve metal or anodized silicon. In this case, it is possible to easily obtain a structure in which the first layer and the second layer are integrally formed, by an anodizing process.

The width of the second through hole may be larger than a spot diameter of the energy ray. In this case, it is possible to reduce a portion in which an irradiation region of the energy ray overlaps with a partition portion between the second through holes of the second layer when seen from the thickness direction of the sample support body, compared to a case where the width of the second through hole is smaller than the spot diameter of the energy ray. That is, it is possible to reduce a portion in which the irradiation region of the energy ray overlaps with a portion in which the component of the sample in the first layer is not moved to the first surface side. Accordingly, it is possible to efficiently ionize the component of the sample.

In the third step, the sample support body may be peeled off from the sample, before the component attached to the first layer is dried. In this case, it is possible to more smoothly peel off the sample support body from the sample, before the sample support body and the sample are firmly fixed.

A method for ionizing a sample according to another aspect of the present disclosure, includes: a first step of preparing a sample and the sample support body including the first layer having conductivity; a second step of disposing the sample support body on the sample such that a surface of the second layer on a side opposite to the first layer faces the sample; a third step of peeling off the sample support body from the sample; and a fourth step of ionizing a component of the sample by irradiating a surface of the first layer on a side opposite to the second layer with an energy ray while applying a voltage to the first layer.

According to the method for ionizing a sample, it is possible to omit the conductive layer from the sample support body and to obtain the same effects as those in the case of using the sample support body including the conductive layer as described above.

A method for ionizing a sample according to another aspect of the present disclosure, includes: a first step of preparing a sample and the sample support body in which the second layer is provided on the conductive layer; a second step of disposing the sample support body on the sample such that a surface of the first layer on a side opposite to the second layer faces the sample; a third step of peeling off the sample support body from the sample; and a fourth step of ionizing a component of the sample by irradiating a surface of the first layer on the second layer side with an energy ray while applying a voltage to the conductive layer.

In the method for ionizing a sample, the sample support body includes the first layer, the conductive layer provided on the surface of the first layer, and the second layer provided on the conductive layer. Then, the plurality of first through holes extending in the thickness direction of the sample support body are formed on the first layer, and the plurality of second through holes that respectively extend in the thickness direction and are communicated with one or more first through holes are formed on the second layer. In a case where the sample support body is disposed on the sample such that the surface of the first layer on a side opposite to the second layer faces the sample, the sample (the component of the sample) is moved from the surface side of the first layer on a side opposite to the second layer towards the second layer side through the first through hole. Further, in a case where the sample support body is peeled off from the sample, and then, the surface of the first layer on the second layer side is irradiated with an energy ray while a voltage is applied to the conductive layer, energy is transmitted to the component of the sample that is moved to the surface side of the first layer on the second layer side. Accordingly, the component of the sample is ionized. In the method for ionizing a sample, as described above, the second layer is provided on the conductive layer. Accordingly, the first layer is reinforced by the second layer, and thus, the breakage of the first layer when the sample support body is peeled off from the sample is suppressed. Accordingly, according to the method for ionizing a sample, it is possible to suppress the breakage of the sample support body.

A mass spectrometry method according to one aspect of the present disclosure, includes: each of the steps of the method for ionizing a sample; and a fifth step of detecting the component ionized in the fourth step.

According to the mass spectrometry method, it is possible to perform mass spectrometry while suppressing the breakage of the sample support body.

A mass spectrometry method according to another aspect of the present disclosure, includes: a first step of preparing a sample including a non-flat surface and the sample support body including the third layer; a second step of disposing the sample support body on the sample such that a surface of the second layer on a side opposite to the first layer faces the sample and the sample support body is along the non-flat surface of the sample; a third step of memorizing a surface shape of the sample by the third layer; a fourth step of peeling off the sample support body from the sample; a fifth step of recognizing the surface shape of the sample is memorized by the third layer; a sixth step of ionizing a component of the sample by irradiating the first layer on a side opposite to the second layer with an energy ray while applying a voltage to the first layer, after the first layer and the second layer are formed into a flat plate-like shape; a seventh step of detecting the ionized component and acquiring a two-dimensional distribution of the ionized component; and an eighth step of acquiring a three-dimensional surface distribution of the ionized component by synthesizing the surface shape of the sample and the two-dimensional distribution of the ionized component.

In the mass spectrometry method, the sample includes a non-flat surface. In addition, the sample support body further includes the third layer provided on the first layer on a side opposite to the second layer. In a case where the sample support body is disposed on the sample such that the surface of the second layer on a side opposite to the first layer faces the sample and the sample support body is along the surface of the sample, the component of the sample is moved to the surface side of the first layer. In addition, the surface shape of the sample is memorized by the third layer, in a state where the sample support body is disposed on the sample such that the sample support body is along the surface of the sample. Then, the surface shape of the sample that is memorized by the third layer is recognized. On the other hand, in a case where the first layer and the second layer are formed into the shape of a flat plate, and then, the first layer on a side opposite to the second layer is irradiated with an energy ray while a voltage is applied, energy is transmitted to the component of the sample that is moved to the surface side of the first layer. Accordingly, the component of the sample is ionized. Then, the ionized component of the sample is detected, and the two-dimensional distribution of the ionized component is acquired. Further, the surface shape of the sample and the two-dimensional distribution of the ionized component are synthesized, and thus, the three-dimensional surface distribution of the ionized component is acquired. As described above, according to the mass spectrometry method, it is possible to acquire the three-dimensional surface distribution with respect to the component of the sample including a non-flat surface while suppressing the breakage of the sample support body.

### Advantageous Effects of Invention

According to the present disclosure, it is possible to provide a sample support body, a method for ionizing a sample, and a mass spectrometry method in which a breakage is suppressed.

### Brief Description of Drawings

FIG. 1 is a plan view and a bottom view of a sample support body according to a first embodiment.
FIG. 2 is a sectional view of the sample support body along line II-II illustrated in FIG. 1.
FIG. 3 is a diagram illustrating an enlarged image of a first layer when seen from a thickness direction of the first layer illustrated in FIG. 1.
FIG. 4 is a diagram illustrating a mesh structure example of a second layer when seen from a thickness direction of the second layer illustrated in FIG. 1.
FIG. 5 is a diagram illustrating a procedure of a mass spectrometry method according to the first embodiment.
FIG. 6 is a diagram illustrating the procedure of the mass spectrometry method according to the first embodiment.
FIG. 7 is a diagram illustrating results of a mass spectrometry method of an example of the first embodiment.
FIG. 8 is a plan view of a sample support body according to a second embodiment.
FIG. 9 is a sectional view of the sample support body along line IX-IX illustrated in FIG. 8.
FIG. 10 is a diagram illustrating a procedure of a mass spectrometry method according to the second embodiment.
FIG. 11 is a diagram illustrating the procedure of the mass spectrometry method according to the second embodiment.
FIG. 12 is a diagram illustrating a sample support body according to a modification example.
FIG. 13 is a diagram illustrating a sample support body according to a modification example.
FIG. 14 is a diagram illustrating a sample support body according to a modification example.
FIG. 15 is a sectional view of a sample support body according to a third embodiment.
FIG. 16 is a diagram illustrating a procedure of a mass spectrometry method according to the third embodiment.
FIG. 17 is a sectional view of a sample support body according to a fourth embodiment.
FIG. 18 is a diagram illustrating a procedure of a method for manufacturing a first layer illustrated in FIG. 17.
FIG. 19 is a sectional view of a sample support body according to a fifth embodiment.
FIG. 20 is a diagram illustrating a procedure of a mass spectrometry method according to the fifth embodiment.

### Description of Embodiments

Hereinafter, preferred embodiments of the present disclosure will be described in detail, with reference to the drawings. Note that, in each of the drawings, the same reference numerals will be applied to the same portions or the corresponding portions, and the repeated description will be omitted. In addition, dimensions or dimensional ratios of each member (or part) illustrated in the drawings may be different from actual dimensions or dimensional ratios in order to make the description easy to understand.

### [First Embodiment]

### [Configuration of Sample Support Body]

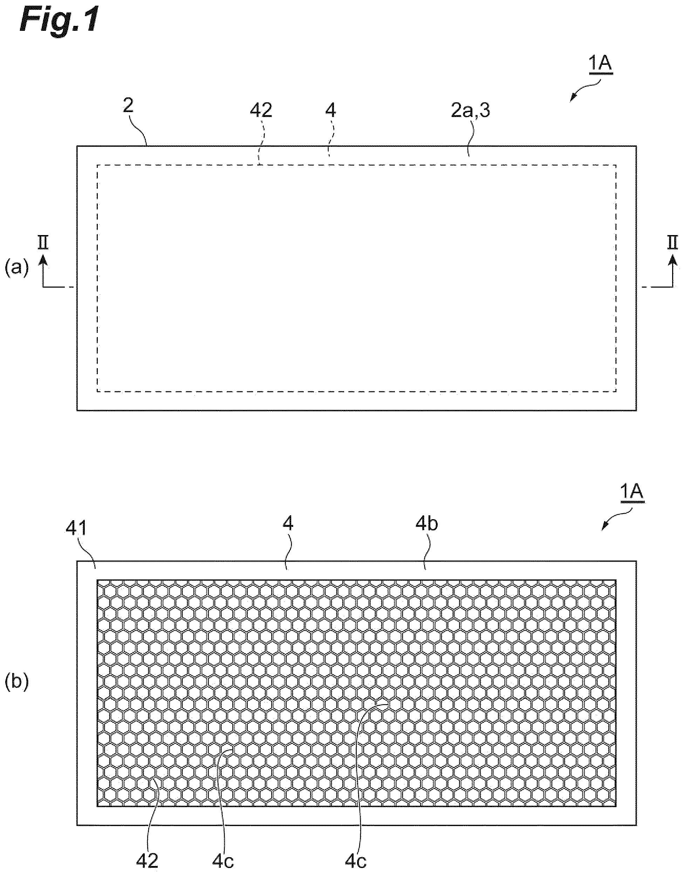

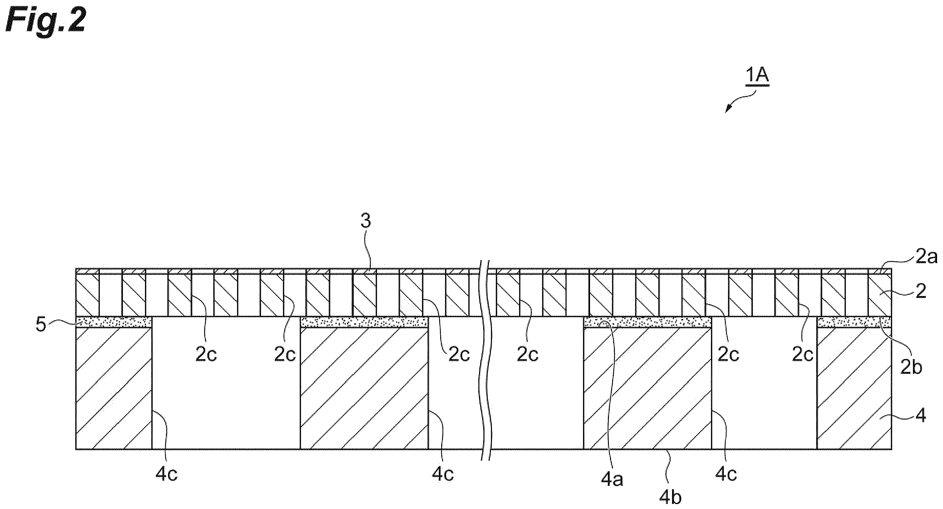

(a) of FIG. 1 illustrates a plan view of a sample support body 1A of a first embodiment, and (b) of FIG. 1 illustrates a bottom view of the sample support body 1A. As illustrated in FIG. 1 and FIG. 2, the sample support body 1A includes a first substrate (a first layer) 2, a conductive layer 3, a second substrate (a second layer) 4, and an adhesive layer 5. The sample support body 1A is a sample support body for ionizing a sample. The sample support body 1A, for example, is used for ionizing a component of a sample that is a measurement target, at the time of performing mass spectrometry.

The first substrate 2 includes a first surface 2a and a second surface 2b on a side opposite to the first surface 2a. A plurality of first through holes 2c are formed on the first substrate 2 uniformly (with a homogeneous distribution). Each of the first through holes 2c extends in a thickness direction (hereinafter, simply referred to as the "thickness direction") of the sample support body 1A (that is, each of the first substrate 2 and the second substrate 4), and opens to the first surface 2a and the second surface 2b. The thickness direction is a direction perpendicular to the first surface 2a and the second surface 2b, and a third surface 4a and a fourth surface 4b described below. The first substrate 2, for example, is formed of an insulating material into the shape of a rectangular plate. The length of one side of the first substrate 2 when seen from the thickness direction, for example, is approximately several cm, and the thickness of the first substrate 2, for example, is approximately 1 µm to 50 µm. In this embodiment, the thickness of the first substrate 2 is approximately 5 µm.

The conductive layer 3 is provided on the first surface 2a of the first substrate 2. The conductive layer 3 is provided on a peripheral portion of the first through hole 2c in the first surface 2a. That is, the conductive layer 3 covers a portion of the first surface 2a of the first substrate 2 on which the first through hole 2c is not formed. That is, the conductive layer 3 is provided not to block the first through hole 2c.

The conductive layer 3 is formed of a conductive material. Here, it is preferable that a metal having low affinity (reactivity) with respect to a sample and high conductivity is used as the material of the conductive layer 3, from the following reasons.

For example, in a case where the conductive layer 3 is formed of a metal such as copper (Cu) having high affinity with respect to a sample such as protein, in a process of ionizing the sample described below, the sample is ionized in a state where Cu atoms are attached to sample molecules, and thus, there is a concern that a detection result is shifted in a mass spectrometry method described below as the Cu atoms are attached. Therefore, it is preferable that a metal having low affinity with respect to the sample is used as the material of the conductive layer 3.

On the other hand, a metal having high conductivity easily and stably applies a constant voltage. For this reason, in a case where the conductive layer 3 is formed of the metal having high conductivity, it is possible to homogeneously apply a voltage to the first surface 2a of the first substrate 2. In addition, there is a tendency that the metal having high conductivity also has high thermal conductivity. For this reason, in a case where the conductive layer 3 is formed of the metal having high conductivity, it is possible to efficiently transfer the energy of an energy ray such as laser beam that is applied to the first substrate 2 to the sample via the conductive layer 3. Therefore, it is preferable that the metal having high conductivity is used as the material of the conductive layer 3.

From the viewpoint described above, for example, it is preferable that gold (Au), platinum (Pt), and the like are used as the material of the conductive layer 3. The conductive layer 3, for example, is formed to have a thickness of approximately 1 nm to 350 nm by a plating method, an atomic layer deposition (ALD) method, a vapor deposition method, a sputtering method, and the like. In this embodiment, the thickness of the conductive layer 3 is approximately 10 nm. Note that, for example, chromium (Cr), nickel (Ni), titanium (Ti), and the like may be used as the material of the conductive layer 3.

The first substrate 2 and the second substrate 4 are formed separately from each other. The second substrate 4 is provided on the first substrate 2 on a side opposite to the conductive layer 3. That is, the second substrate 4 is provided on the second surface 2b of the first substrate 2. The second substrate 4 includes the third surface 4a and the fourth surface 4b on a side opposite to the third surface 4a. The second substrate 4 is provided such that the third surface 4a faces the second surface 2b of the first substrate 2. The second substrate 4 is fixed to the second surface 2b of the first substrate 2 by the adhesive layer 5.

The second substrate 4 includes a frame portion 41 and a mesh portion 42. The frame portion 41, for example, is in the shape of a rectangular frame. The mesh portion 42 is provided inside the frame portion 41. A plurality of second through holes 4c are formed on the mesh portion 42 uniformly (with a homogeneous distribution). Each of the second through holes 4c extends in the thickness direction and opens to the third surface 4a and the fourth surface 4b. Each of the plurality of second through holes 4c is communicated with one or more first through holes 2c. In this embodiment, each of the second through holes 4c is communicated with the plurality of first through holes 2c. The second substrate 4 has approximately the same outer shape as that of the first substrate 2 when seen from the thickness direction. The thickness of the second substrate 4, for example, is approximately 1 µm to 3000 µm. In this embodiment, the thickness of the second substrate 4 is approximately 100 µm.

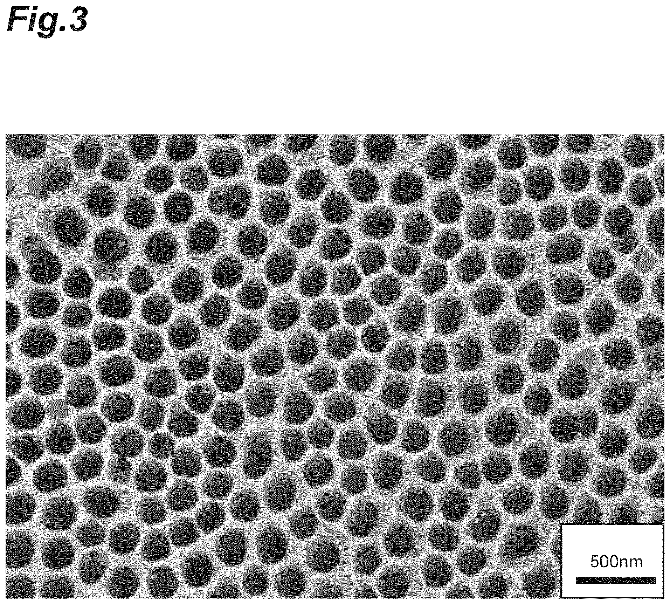

FIG. 3 is a diagram illustrating an enlarged image of the first substrate 2 when seen from the thickness direction. In FIG. 3, a black portion is the first through hole 2c, and a white portion is a partition portion between the first through holes 2c. As illustrated in FIG. 3, the plurality of first through holes 2c having an approximately constant width are uniformly formed on the first substrate 2. The first through hole 2c, for example, is approximately in the shape of a circle when seen from the thickness direction. The width of the first through hole 2c, for example, is approximately 1 nm to 700 nm. In this embodiment, the width of the first through hole 2c is approximately 200 nm. The width of the first through hole 2c indicates the diameter of the first through hole 2c in a case where the first through hole 2c is approximately in the shape of a circle when seen from the thickness direction, and indicates the diameter (an effective diameter) of a virtual maximum cylinder falling into the first through hole 2c in a case where the first through hole 2c is not approximately in the shape of a circle. A pitch between the respective first through holes 2c, for example, is approximately 1 nm to 1000 nm. In a case where the first through hole 2c is approximately in the shape of a circle when seen from the thickness direction, the pitch between the respective first through holes 2c indicates a center-to-center distance of the respective circles, and in a case where the first through hole 2c is not approximately in the shape of a circle, the pitch between the respective first through holes 2c indicates a center axis-to-center axis distance of the virtual maximum cylinder falling into the first through hole 2c. The width of the partition portion between the first through holes 2c on the first substrate 2, for example is approximately 300 nm.

It is preferable that an opening rate of the first through holes 2c (a ratio of all of the first through holes 2c to the first surface 2a when seen from the thickness direction) is practically 10% to 80%, and is particularly 60% to 80%. The sizes of the plurality of first through holes 2c may be uneven with each other, and the plurality of first through holes 2c may be partially connected to each other.

The first substrate 2, for example, is an alumina porous film that is formed by anodizing aluminum (Al). Specifically, an anodizing treatment is performed with respect to an Al substrate, and a surface portion that is oxidized is peeled off from the Al substrate, and thus, the first substrate 2 can be obtained. Note that, the first substrate 2 may be formed by anodizing a valve metal other than Al, such as tantalum (Ta), niobium (Nb), titanium (Ti), hafnium (Hf), zirconium (Zr), zinc (Zn), tungsten (W), bismuth (Bi), and antimony (Sb), or may be formed by anodizing silicon (Si).

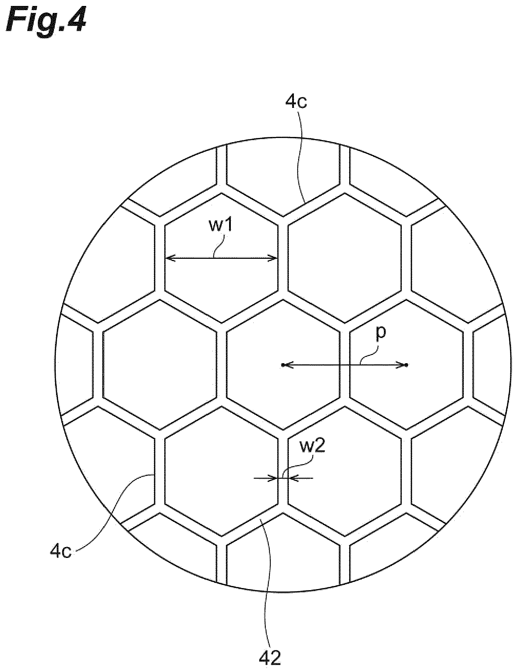

FIG. 4 is a diagram illustrating a structure example of the mesh portion 42 of the second substrate 4 when seen from the thickness direction. As illustrated in FIG. 4, the plurality of second through holes 4c having an approximately constant width are uniformly formed on the second substrate 4. The second through hole 4c, for example, approximately in the shape of a hexagon when seen from the thickness direction. A width w1 of the second through hole 4c, for example, is approximately 1 µm to 1000 µm. In this embodiment, the width w1 of the second through hole 4c is approximately 440 µm to 470 µm. As described above, the width of the first through hole 2c is smaller than the width w1 of the second through hole 4c. The width w1 of the second through hole 4c indicates the diameter (an effective diameter) of a virtual maximum cylinder falling into the second through hole 4c. That is, as with the example of FIG. 4, in a case where the second through hole 4c is approximately in the shape of a hexagon when seen from the thickness direction, the width w1 of the second through hole 4c indicates a distance between two facing side portions of the hexagon. A pitch p between the respective second through holes 4c, for example, is approximately 1 µm to 1100 µm. In this embodiment, the pitch p between the second through holes 4c is approximately 455 µm to 530 µm. As described above, the pitch between the respective first through holes 2c is smaller than the pitch p between the respective second through holes 4c. That is, the pitch between the respective first through holes 2c and the pitch p between the respective second through holes 4c are different from each other. The pitch p between the respective second through holes 4c indicates a center axis-to-center axis distance of the virtual maximum cylinder falling into the second through hole 4c. A width w2 of a partition portion between the second through holes 4c on the mesh portion 42, for example, is approximately 30 µm to 60 µm.

An opening rate of the second through holes 4c (a ratio of all of the second through holes 4c to the third surface 4a when seen from the thickness direction) is greater than or equal to 80%. As described above, the opening rate of the first through hole 2c is less than the opening rate of the second through hole 4c. The sizes of the plurality of second through holes 4c may be uneven with each other, and the plurality of second through holes 4c may be partially connected to each other. The material of the second substrate 4, for example, is stainless steel (SUS) or the like. The second substrate 4, for example, can be formed by etching a SUS substrate.

The adhesive layer 5 is provided between the second surface 2b of the first substrate 2 and the third surface 4a of the second substrate 4. The adhesive layer 5 is provided not to hinder the communication between the first through hole 2c and the second through hole 4c. Specifically, the adhesive layer 5 is provided on a peripheral portion of the second through hole 4c in the third surface 4a of the second substrate 4. That is, the adhesive layer 5 covers a portion of the third surface 4a of the second substrate 4 on which the second through hole 4c is not formed. That is, the adhesive layer 5 is provided not to block the second through hole 4c. The adhesive layer 5 joins and fixes the first substrate 2 and the second substrate 4. It is preferable that an adhesive material having less emitted gas (for example, glass with a low melting point, a vacuum adhesive agent, and the like) is used as the material of the adhesive layer 5.

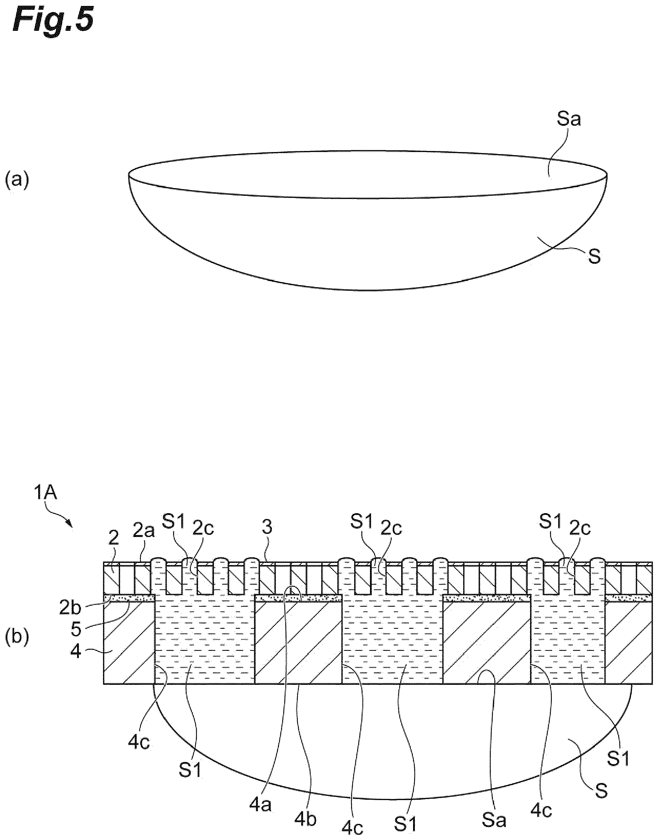

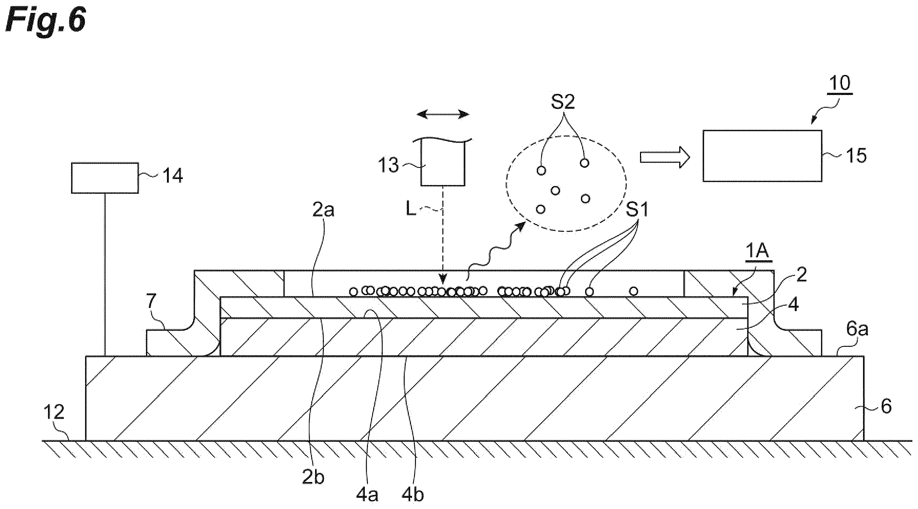

As described above, the sample support body 1A includes the first substrate 2, the conductive layer 3 provided on the first surface 2a of the first substrate 2, and the second substrate 4 provided on the first substrate 2 on a side opposite to the conductive layer 3. Then, the plurality of first through holes 2c extending in the thickness direction of the sample support body 1A are formed on the first substrate 2, and the plurality of second through holes 4c that respectively extend in the thickness direction and are communicated with one or more first through holes 2c are formed on the second substrate 4. For this reason, in a case where the sample support body 1A is disposed on a sample S such that the fourth surface 4b of the second substrate 4 on a side opposite to the first substrate 2 faces the sample S, it is possible to move a component S1 of the sample S from the fourth surface 4b side of the second substrate 4 towards the first substrate 2 side through the second through hole 4c (refer to FIG. 5). Then, it is possible to move the component S1 of the sample S from the second substrate 4 side of the first substrate 2 towards the first surface 2a side of the first substrate 2 through the first through hole 2c by using a capillary action. Further, in a case where the first surface 2a of the first substrate 2 is irradiated with laser beam L, energy is transmitted to the component S1 of the sample S that is moved to the first surface 2a side of the first substrate 2 via the conductive layer 3, and thus, the component S1 of the sample S can be ionized (refer to FIG. 6). In addition, as described above, second substrate 4 is provided on the first substrate 2 on a side opposite to the conductive layer 3. Accordingly, the first substrate 2 is reinforced by the second substrate 4, and thus, the breakage of the first substrate 2 when the sample support body 1A is peeled off from the sample S is suppressed. Accordingly, according to the sample support body 1A, it is possible to suppress the breakage of the sample support body 1A.

The width of the first through hole 2c is 1 nm to 700 nm, and the thickness of the first substrate 2 is 1 µm to 50 µm. Accordingly, it is possible to suitably attain the movement of the component S1 of the sample S according to the capillary action described above.

The width of the second through hole 4c is 1 µm to 1000 µm, and the thickness of the second substrate 4 is 1 µm to 3000 µm. Accordingly, as described above, it is possible to suitably make the movement of the component S1 of the sample S from the fourth surface 4b side of the second substrate 4 on a side opposite to the first substrate 2 towards the first substrate 2 side through the second through hole 4c and the reinforcement of the first substrate 2 with the second substrate 4 compatible.

The first substrate 2 and the second substrate 4 are formed separately from each other. Accordingly, it is possible to improve a freedom degree of the combination of the first substrate 2 and the second substrate 4.

The sample support body 1A includes the adhesive layer 5 that is provided between the first substrate 2 and the second substrate 4 and joins the first substrate 2 and the second substrate 4. Accordingly, it is possible to more reliably fix the first substrate 2 and the second substrate 4.

### [Method for Ionizing Sample]

Next, a method for ionizing a sample, using the sample support body 1A, will be described with reference to FIG. 5 to FIG. 7. Here, as an example, a laser desorption/ionization method (a part of a mass spectrometry method of a mass spectrometry device 10) using laser beam (an energy ray) will be described. In FIG. 6, the first through hole 2c, the second through hole 4c, the conductive layer 3, and the adhesive layer 5 in the sample support body 1A are not illustrated.

First, as illustrated in (a) of FIG. 5, the sample S and the sample support body 1A described above are prepared (a first step). The sample S is cut, and a sectional surface Sa thereof is exposed. Here, the sample S, for example, is a biological sample (a hydrous sample). The sample S, for example, is a fruit such as a strawberry. In order to smoothly move the component S1 of the sample S (refer to (b) of FIG. 5), a solution (for example, an acetonitrile mixed liquid, acetone, or the like) for decreasing the viscosity of the component S1 may be added to the sample S. The sample support body 1A may be prepared by being manufactured by a person who carries out an ionization method and the mass spectrometry method, or may be prepared by being acquired from a manufacturer, a seller, or the like of the sample support body 1A.

Subsequently, as illustrated in (b) of FIG. 5, the sample support body 1A is disposed on the sample S such that the surface (the fourth surface 4b) of the second substrate 4 on a side opposite to the first substrate 2 faces the sectional surface Sa of the sample S (a second step). The first substrate 2 and the second substrate 4 are disposed on the sample S in a state of being joined to each other. The sample support body 1A is disposed on the sample S such that the fourth surface 4b of the second substrate 4 is in contact with the sectional surface Sa. The component S1 of the sample S is moved from the fourth surface 4b side of the second substrate 4 towards the first substrate 2 side through the second through hole 4c, and reaches the second surface 2b of the first substrate 2, by a capillary action. Then, the component S1 of the sample S is moved from the second surface 2b side of the first substrate 2 towards the first surface 2a side of the first substrate 2 through the first through hole 2c by a capillary action. The component S1 that is moved to the first surface 2a side of the first substrate 2 is remained on the first surface 2a side by a surface tension.

Subsequently, the sample support body 1A is peeled off from the sample S (a third step). The first substrate 2 and the second substrate 4 are peeled off from the sample S in a state of being joined to each other. The sample support body 1A is peeled off from the sample S, before the component S1 attached to the first substrate 2 is dried.

Subsequently, as illustrated in FIG. 6, the sample support body 1A is mounted on a mounting surface 6a of a glass slide (a mounting portion) 6 such that the fourth surface 4b of the second substrate 4 faces the mounting surface 6a. The glass slide 6 is a glass substrate on which a transparent conductive film such as an indium tin oxide (ITO) film is formed, and the surface of the transparent conductive film is the mounting surface 6a. Note that, not only the glass slide 6 but also a member that is capable of ensuring conductivity (for example, a substrate formed of a metal material such as stainless steel, or the like) can be used as the mounting portion.

Subsequently, the sample support body 1A is fixed to the glass slide 6. The sample support body 1A is fixed to the glass slide 6 by a tape 7 (for example, a carbon tape or the like) having conductivity. Specifically, the tape 7 is in contact with the conductive layer 3 on the first surface 2a of the first substrate 2 and is in contact with the mounting surface 6a of the glass slide 6, and thus, the sample support body 1A is fixed to the glass slide 6. The tape 7 may be a part of the sample support body 1A, or may be prepared separately from the sample support body 1A. In a case where the tape 7 is a part of the sample support body 1A (that is, in a case where the sample support body 1A includes the tape 7), for example, the tape 7 may be fixed in advance to the first surface 2a side in a peripheral portion of the first substrate 2. More specifically, the tape 7 may be fixed onto the conductive layer 3 in the peripheral portion of the first substrate 2.

Subsequently, in a state where the glass slide 6 and the sample support body 1A are fixed to each other, the glass slide 6 and the sample support body 1A are mounted on a support portion 12 (for example, a stage) of the mass spectrometry device 10. Subsequently, in a state where the component S1 of the sample S that is attached to the sample support body 1A is dried, a voltage is applied to the conductive layer 3 (refer to FIG. 2) of the sample support body 1A via the mounting surface 6a of the glass slide 6 and the tape 7 by a voltage application unit 14 of the mass spectrometry device 10 (a fourth step). Subsequently, the first surface 2a of the first substrate 2 is irradiated with the laser beam L by a laser beam irradiation unit 13 of the mass spectrometry device 10 (the fourth step). Here, the laser beam irradiation unit 13 scans the first surface 2a with the laser beam L. The scanning of the laser beam L with respect to the first surface 2a can be performed by operating at least one of the support portion 12 and the laser beam irradiation unit 13. In addition, the width of the second through hole 4c is larger than a spot diameter of the laser beam L.

As described above, the first surface 2a of the first substrate 2 is irradiated with the laser beam L while a voltage is applied to the conductive layer 3, and thus, the component S1 that is moved to the first surface 2a side of the first substrate 2 is ionized, and a sample ion S2 (the ionized component S1) is emitted. Specifically, energy is transmitted from the conductive layer 3 absorbing the energy of the laser beam L to the component S1 that is moved to the first surface 2a side of the first substrate 2, and the component S1 obtaining the energy is gasified and obtains a charge, and thus, the sample ion S2 is obtained. Each of the steps described above corresponds to the method for ionizing the sample S, using the sample support body 1A (here, as an example, a laser desorption/ionization method as a part of the mass spectrometry method).

The sample ion S2 that is emitted is moved towards a ground electrode (not illustrated) that is provided between the sample support body 1A and an ion detection unit 15 while being accelerated. That is, the sample ion S2 is moved towards the ground electrode while being accelerated by a potential difference that occurs between the conductive layer 3 to which a voltage is applied and the ground electrode. Then, the sample ion S2 is detected by the ion detection unit 15 of the mass spectrometry device 10 (a fifth step). Here, the ion detection unit 15 detects the sample ion S2 to correspond to a scanning position of the laser beam L. Accordingly, it is possible to image a two-dimensional distribution of molecules configuring the sample S. Note that, here, the mass spectrometry device 10 is a mass spectrometry device using a time-of-flight mass spectrometry (TOF-MS) method. Each of the steps described above corresponds to the mass spectrometry method using the sample support body 1A.

As described above, in the method for ionizing the sample S, the sample support body 1A includes the first substrate 2, the conductive layer 3 provided on the first surface 2a of the first substrate 2, and the second substrate 4 provided on the first substrate 2 on a side opposite to the conductive layer 3. Then, the plurality of first through holes 2c extending in the thickness direction of the sample support body 1A are formed on the first substrate 2, and the plurality of second through holes 4c that respectively extend in the thickness direction and are communicated with one or more first through holes 2c are formed on the second substrate 4. In a case where the sample support body 1A is disposed on the sample S such that the fourth surface 4b of the second substrate 4 on a side opposite to the first substrate 2 faces the sample S, the component S1 of the sample S is moved from the fourth surface 4b side of the second substrate 4 towards the first substrate 2 side through the second through hole 4c. Then, the component S1 of the sample S is moved from the second substrate 4 side of the first substrate 2 towards the first surface 2a side of the first substrate 2 through the first through hole 2c. Further, in a case where the sample support body 1A is peeled off from the sample S, and then, the first surface 2a of the first substrate 2 is irradiated with the laser beam L while a voltage is applied to the conductive layer 3, energy is transmitted to the component S1 of the sample S that is moved to the first surface 2a side of the first substrate 2. Accordingly, the component S1 of the sample S is ionized. In the laser desorption/ionization method, as described above, the second substrate 4 is provided on the first substrate 2 on a side opposite to the conductive layer 3. Accordingly, the first substrate 2 is reinforced by the second substrate 4, and thus, the breakage of the first substrate 2 when the sample support body 1A is peeled off from the sample S is suppressed. Accordingly, according to the method for ionizing a sample, it is possible to suppress the breakage of the sample support body 1A.

In the fourth step, in a state where the first substrate 2 and the second substrate 4 are fixed to each other, the component S1 of the sample S is ionized by irradiating the first surface 2a of the first substrate 2 with the laser beam L while applying a voltage to the conductive layer 3. Accordingly, in the fourth step, the first substrate 2 is also suitably reinforced by the second substrate 4.

The width of the second through hole 4c is larger than the spot diameter of the laser beam L. For this reason, it is possible to reduce a portion in which an irradiation region of the laser beam L overlaps with the partition portion between the second through holes 4c of the second substrate 4 when seen from the thickness direction, compared to a case where the width of the second through hole 4c is smaller than the spot diameter of the laser beam L. That is, it is possible to reduce a portion in which the irradiation region of the laser beam L overlaps with a portion in which the component S1 of the sample S in the first substrate 2 is not moved to the first surface 2a side. Accordingly, it is possible to more efficiently ionize the component S1 of the sample S.

In the third step, the sample support body 1A is peeled off from the sample S, before the component S1 attached to the first substrate 2 is dried. Accordingly, it is possible to more smoothly peel off the sample support body 1A from the sample S, before the sample support body 1A and the sample S are firmly fixed.

As described above, according to the mass spectrometry method described above, it is possible to perform mass spectrometry while suppressing the breakage of the sample support body 1A.

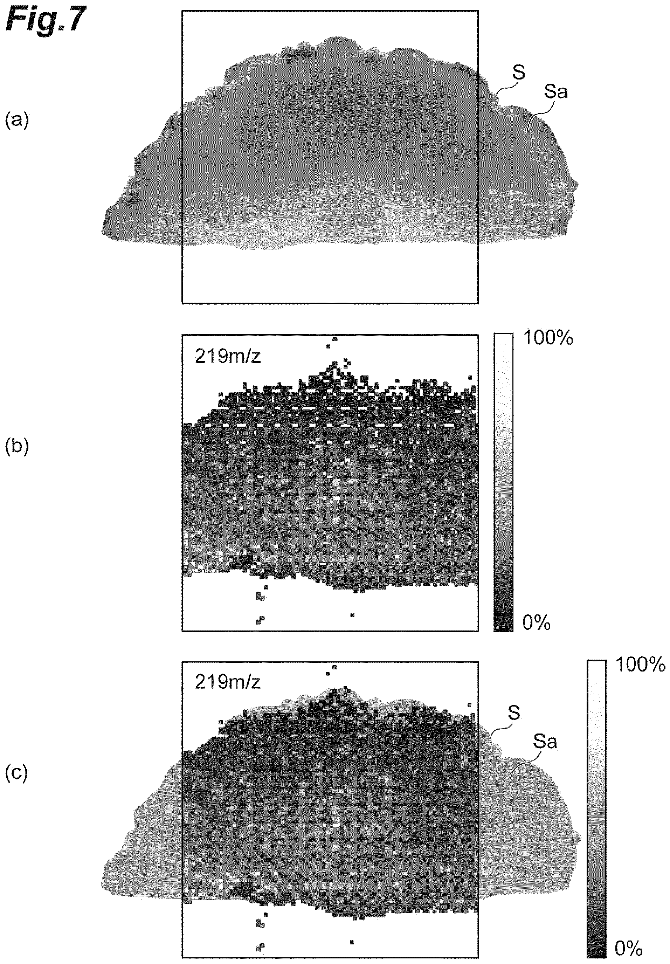

FIG. 7 is a diagram illustrating results of a mass spectrometry method of an example. FIG. 7 illustrates mass spectrometry results at 219 m/z in the sectional surface Sa of the sample (a strawberry) S. (a) of FIG. 7 illustrates an optical image of the sectional surface Sa in which the sample S halved lengthwise is exposed to the outside by being further cut in a horizontal direction. (b) of FIG. 7 illustrates an image of the two-dimensional distribution of the molecules in the sectional surface Sa of the sample S. As illustrated in (c) of FIG. 7, it is possible to perform imaging mass spectrometry with respect to sample S, by synthesizing the image of the two-dimensional distribution of the molecules configuring the sample S and the optical image of the sample S. In FIG. 7, a percentage value represents signal intensity in mass spectrometry. That is, it is indicated that more sample ions S2 are detected as the percentage value becomes higher (the color becomes lighter in the drawing).

### [Second Embodiment]

### [Configuration of Sample Support Body]

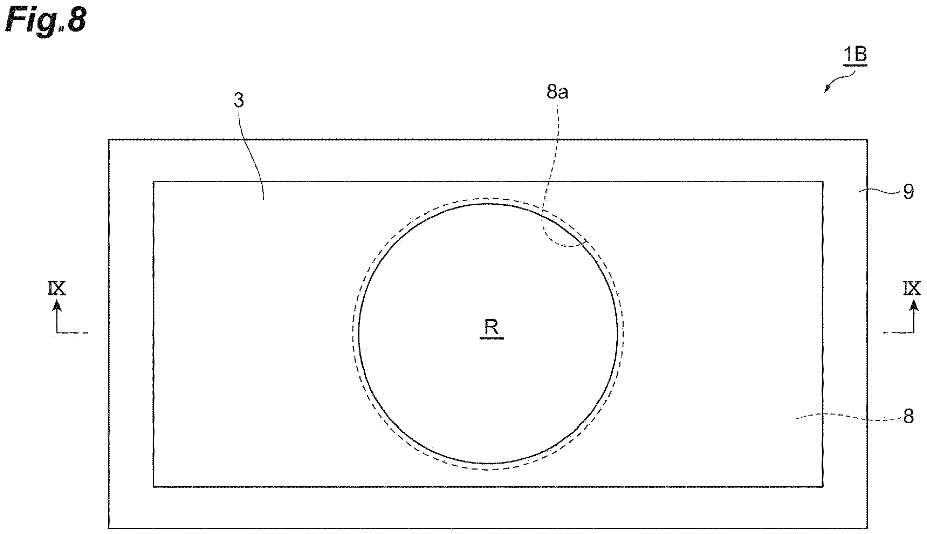

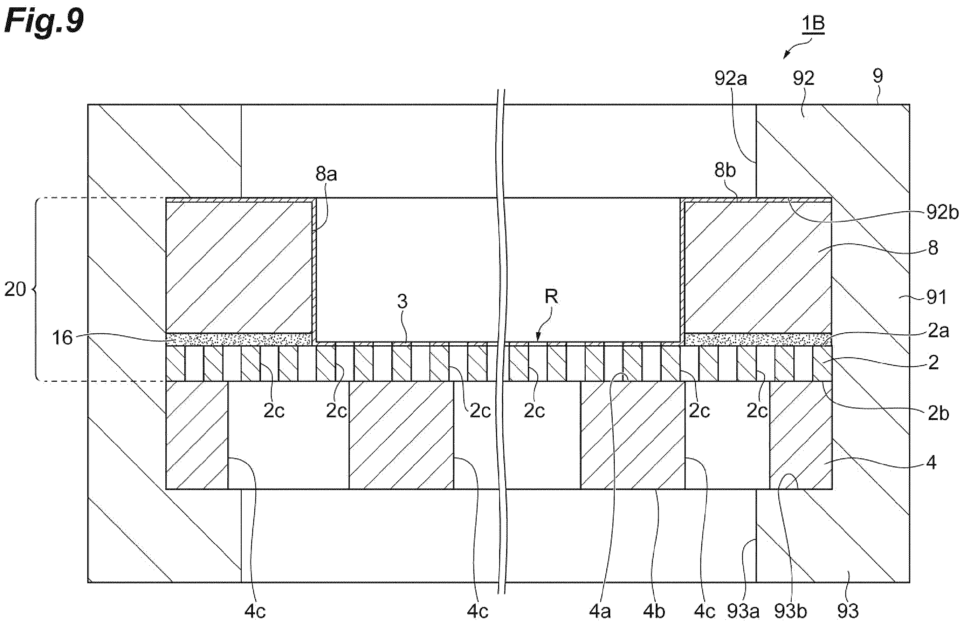

A sample support body 1B of a second embodiment will be described with reference to FIG. 8 and FIG. 9. As illustrated in FIG. 8 and FIG. 9, the sample support body 1B is mainly different from the sample support body 1A of the first embodiment, in that the sample support body 1B further includes a frame (a frame body) 8 and a fixing member 9 and does not include the adhesive layer 5 (refer to FIG. 2). The other configuration of the sample support body 1B of the second embodiment is the same as that of the sample support body 1A of the first embodiment, and thus, the detailed description will be omitted.

The frame 8 is provided on the first surface 2a of the first substrate 2. That is, the frame 8 is provided on the first substrate 2 on a side opposite to the second substrate 4. Specifically, the frame 8 is fixed to the peripheral portion of the first substrate 2. The frame 8 is fixed to the first surface 2a of the first substrate 2 by an adhesive layer 16. It is preferable that an adhesive material having less emitted gas (for example, glass with a low melting point, a vacuum adhesive agent, and the like) is used as the material of the adhesive layer 16. The frame 8 has an approximately the same outer shape as that of the first substrate 2 when seen from the thickness direction. An opening 8a is formed in the frame 8. A portion corresponding to the opening 8a in the first substrate 2 functions as an effective region R for moving the component S1 of the sample S to the first surface 2a side.

The frame 8, for example, is formed of an insulating material into the shape of a rectangular plate. The length of one side of the frame 8 when seen from the thickness direction, for example, is approximately several cm, and the thickness of the frame 8, for example, is less than or equal to 1 mm. The opening 8a, for example, is in the shape of a circle when seen from the thickness direction, and in such a case, the diameter of the opening 8a, for example, is approximately several mm to several tens of mm.

The conductive layer 3 is continuously (integrally) formed in a region corresponding to the opening 8a of the frame 8 in the first surface 2a of the first substrate 2 (that is, a region corresponding to the effective region R), the inner surface of the opening 8a, and a surface 8b of the frame 8 on a side opposite to the first substrate 2. In the effective region R, the conductive layer 3 is provided on the peripheral portion of the first through hole 2c in the first surface 2a. That is, in the effective region R, the conductive layer 3 covers a portion of the first surface 2a of the first substrate 2 on which the first through hole 2c is not formed. That is, the conductive layer 3 is provided not to block the first through hole 2c. In the effective region R, each of the first through holes 2c is exposed to the opening 8a. The first substrate 2, the frame 8, the adhesive layer 16, and the conductive layer 3 configure a substrate 20.

The sample support body 1B does not include the adhesive layer 5. The second substrate 4 is directly disposed on the second surface 2b of the first substrate 2. That is, the second surface 2b of the first substrate 2 and the third surface 4a of the second substrate 4 are in contact with each other.

The fixing member 9 is provided on the outer peripheral portion of the substrate 20 and the second substrate 4. The fixing member 9 is in the shape of a rectangular frame when seen from the thickness direction. The fixing member 9 includes a main body portion 91 having a tubular shape, and a pair of gripping portions 92 and 93 formed on both ends of the main body portion 91 in a thickness direction. The gripping portions 92 and 93 protrude to the inside from the main body portion 91. An inner surface 92a of the gripping portion 92 is positioned between the outer edge of the frame 8 and the inner surface of the opening 8a of the frame 8. The position of an inner surface 93a of the gripping portion 93 is approximately coincident with the inner surface 92a of the gripping portion 92.

The gripping portion 92 and the gripping portion 93 respectively include gripping surfaces 92b and 93b facing each other. A distance between the gripping surface 92b and the gripping surface 93b is approximately identical to the sum of the thickness of the substrate 20 and the thickness of the second substrate 4. The fixing member 9 grips the substrate 20 and the second substrate 4 in the thickness direction, with the gripping surface 92b and the gripping surface 93b. As described above, the fixing member 9 grips the first substrate 2 and the second substrate 4, and thus, fixes the first substrate 2 and the second substrate 4. The fixing member 9, for example, is a member that has elasticity and is detachable from the substrate 20 and the second substrate 4.

As described above, the sample support body 1B further includes the frame 8 that is provided on the first substrate 2 on a side opposite to the second substrate 4 and is fixed to the peripheral portion of the first substrate 2. Accordingly, it is possible to improve the handleability of the sample support body 1B. In addition, the deformation of the first substrate 2 due to a temperature change or the like is suppressed.

The sample support body 1B further includes the fixing member 9 that is provided on the outer peripheral portion of the first substrate 2 and the second substrate 4 and grips the first substrate 2 and the second substrate 4. Accordingly, it is possible to detachably fix the first substrate 2 and the second substrate 4. In addition, for example, the sample support body 1B is peeled off from the sample S, and then, the first substrate 2 is further peeled off from the second substrate 4, and thus, the first surface 2a of the first substrate 2 can be irradiated with the laser beam L. That is, a freedom degree of the use of the sample support body 1B is improved.

### [Method for Ionizing Sample]

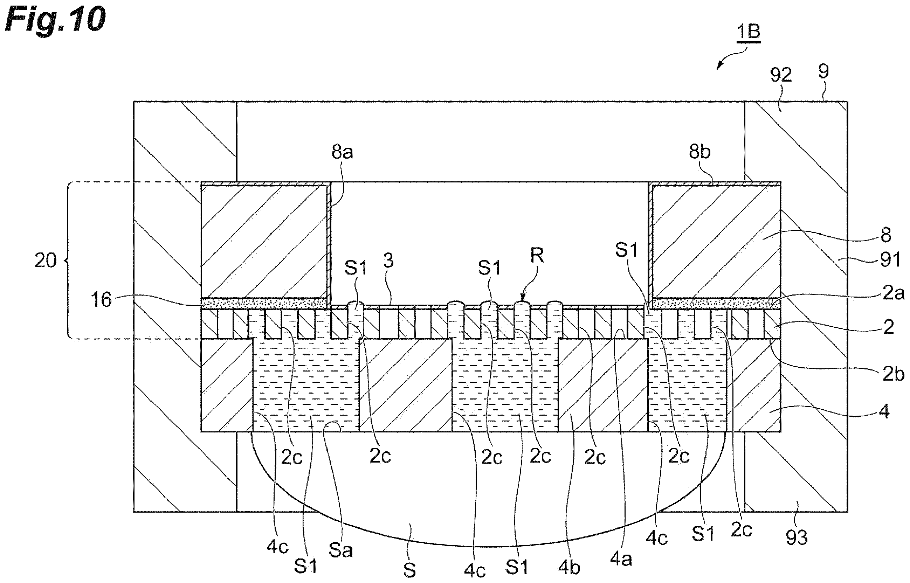

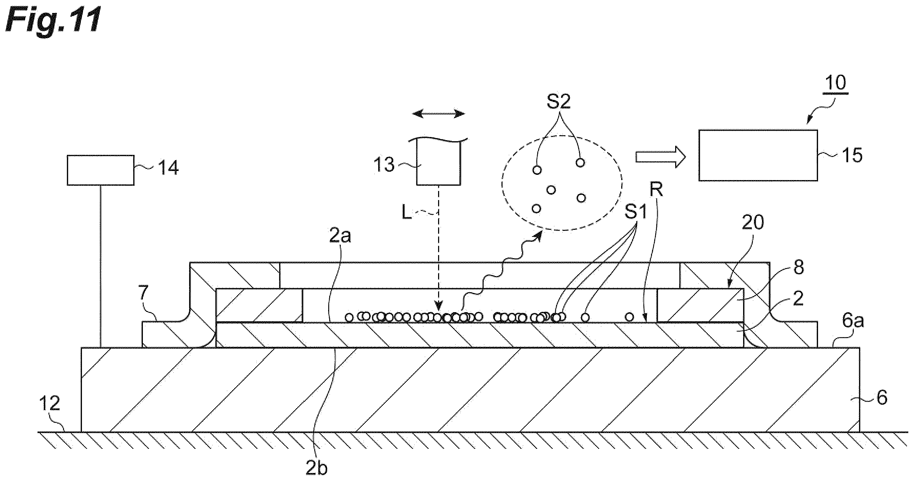

Next, a method for ionizing a sample, using the sample support body 1B, will be described with reference to FIG. 10 and FIG. 11. The method for ionizing a sample, using the sample support body 1B, is mainly different from the method for ionizing a sample, using the sample support body 1A, in that in the third step described above, the sample support body 1B is peeled off from the sample S, and then, the first substrate 2 is further peeled off from the second substrate 4. The other procedure of the method for ionizing a sample, using the sample support body 1B, is the same as that of the method for ionizing a sample, using the sample support body 1A, and thus, the detailed description will be omitted. In FIG. 11, the first through hole 2c, the conductive layer 3, and the adhesive layer 16 in the sample support body 1B are not illustrated.

As illustrated in FIG. 10, first, the sample S and the sample support body 1B are prepared (a first step), and then, the sample support body 1B is disposed on the sample S such that the surface of the second substrate 4 on a side opposite to the first substrate 2 (the fourth surface 4b) faces the sectional surface Sa of the sample S (a second step). The sample support body 1A is disposed on the sample S such that the fourth surface 4b of the second substrate 4 is in contact with the sectional surface Sa. Then, the component S1 that is moved to the first surface 2a side of the first substrate 2 is remained on the first surface 2a side by a surface tension.

Subsequently, the sample support body 1B is peeled off from the sample S (a third step). That is, the first substrate 2 and the second substrate 4 are peeled off from the sample S in a state of being fixed to each other by the fixing member 9. Subsequently, the substrate 20 is peeled off from the second substrate 4. Specifically, the fixing member 9 is detached from the substrate 20 and the second substrate 4, and thus, the substrate 20 is peeled off from the second substrate 4.

Subsequently, as illustrated in FIG. 11, the substrate 20 is mounted on the mounting surface 6a of the glass slide (the mounting portion) 6. Subsequently, the substrate 20 is fixed to the glass slide 6 by the tape 7. Specifically, the tape 7 is in contact with the surface of the conductive layer 3 that is formed on the surface 8b of the frame 8 and is in contact with the mounting surface 6a of the glass slide 6, and thus, the substrate 20 is fixed to the glass slide 6. The tape 7 may be a part of the sample support body 1B, or may be prepared separately from the sample support body 1B. In a case where the tape 7 is a part of the sample support body 1B (that is, in a case where the sample support body 1B includes the tape 7), for example, the tape 7 may be fixed in advance to the surface 8b side in a peripheral portion of the frame 8. More specifically, the tape 7 may be fixed onto the conductive layer 3 in the peripheral portion of the frame 8.

Subsequently, in a state where the glass slide 6 and the substrate 20 are fixed to each other, the glass slide 6 and the substrate 20 are mounted on the support portion 12 (for example, the stage) of the mass spectrometry device 10. Subsequently, in a state where the component S1 of the sample S that is attached to the sample support body 1B is dried, a voltage is applied to the conductive layer 3 (refer FIG. 9) of the substrate 20 via the mounting surface 6a of the glass slide 6 and the tape 7 by the voltage application unit 14 of the mass spectrometry device 10 (a fourth step). Subsequently, the first surface 2a of the first substrate 2 is irradiated with the laser beam L by the laser beam irradiation unit 13 of the mass spectrometry device 10 (the fourth step).

As described above, the first surface 2a of the first substrate 2 is irradiated with the laser beam L while a voltage is applied to the conductive layer 3, and thus, the component S1 that is moved to the first surface 2a side of the first substrate 2 is ionized, and the sample ion S2 (the ionized component S1) is emitted. Each of the steps described above corresponds to the method for ionizing the sample S, using the sample support body 1B (here, as an example, a laser desorption/ionization method as a part of the mass spectrometry method).

The sample ion S2 that is emitted is moved towards a ground electrode (not illustrated) that is provided between the sample support body 1B and the ion detection unit 15 while being accelerated. Then, the sample ion S2 is detected by the ion detection unit 15 of the mass spectrometry device 10 (a fifth step). Each of the steps described above corresponds to the mass spectrometry method using the sample support body 1B.

As described above, the first substrate 2 and the second substrate 4 are formed separately from each other, and in the third step, the sample support body 1B is peeled off from the sample S, and then, the first substrate 2 is peeled off from the second substrate 4. In this case, in the fourth step, it is possible to prevent the occurrence of a measurement noise due to the second substrate 4. For example, in a case where the fourth step is performed in a state where the first substrate 2 and the second substrate 4 are fixed to each other, there is a concern that in the fifth step, the mass of a mesh material configuring the mesh portion 42 is detected as a measurement noise, in a portion overlapping with the partition portion between the second through holes 4c on the mesh portion 42 of the second substrate 4. Further, in a case where the adhesive layer 5 is provided as with the first embodiment, there is a concern that the mass of the adhesive layer 5 is also detected as a measurement noise. On the other hand, according to the method for ionizing a sample, using the sample support body 1B described above, the occurrence of such a problem can be prevented. In addition, for example, in the sample support body 1B, the second substrate 4 not having resistance with respect to the laser beam L may be used. In such a case, in a case where the laser beam L is applied without peeling off the first substrate 2 from the second substrate 4, there is a concern that the second substrate 4 is damaged. According to the method for ionizing a sample, using the sample support body 1B described above, the occurrence of such a problem can also be prevented.

In addition, in the third step, the substrate 20 is peeled off from the second substrate 4, and then, is mounted on the mounting surface 6a of the glass slide 6. Then, the substrate 20 is mounted on the support portion 12 of the mass spectrometry device 10. For this reason, a height from the support portion 12 of the first surface 2a that is irradiated with the laser beam L is the same as that of a case where the sample support body 1B does not include the second substrate 4. Accordingly, when the sample support body 1B is peeled off from the sample S and the laser beam L is applied, the laser beam L can be applied while the first substrate 2 is reinforced by the second substrate 4, in the same condition as that of a case where the sample support body 1B does not include the second substrate 4. That is, the height of a light condensing position of the laser beam L may be adjusted again. Accordingly, it is possible to more simply ionize the sample S.

### [Modification Example of First Embodiment and Second Embodiment]

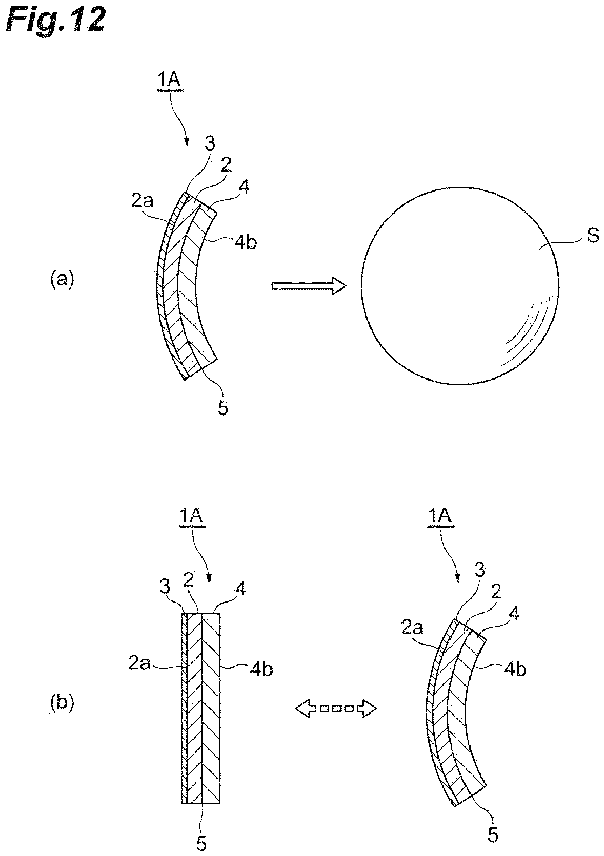

FIG. 12 to FIG. 14 are diagrams illustrating sample support bodies according to modification examples that can be applied to the first embodiment and the second embodiment. As illustrated in (a) of FIG. 12, the first substrate 2 and the second substrate 4 may have a curved shape. Specifically, the fourth surface 4b of the second substrate 4 is not a flat surface, but has a non-flat (stereoscopic) shape. The fourth surface 4b of the second substrate 4, for example, is in the shape of a spherical surface. Here, the entire sample support body 1A has a curved shape. That is, the first substrate 2, the conductive layer 3, and the adhesive layer 5 also have a shape along the second substrate 4.

According to the sample support body 1A having such a curved shape, in mass spectrometry of the sample S including a non-flat surface (for example, approximately in the shape of a spherical surface), it is possible to perform three-dimensional surface mapping. Specifically, the sample support body 1A is disposed on the sample S such that the fourth surface 4b of the second substrate 4 faces the non-flat surface of the sample S. Then, the component S1 of the sample S is moved to the first surface 2a side of the first substrate 2. Then, the sample support body 1A is peeled off from the sample S, and then, for example, 3D structure scanning using laser beam is performed, and thus, a three-dimensional shape of the sample support body 1A (that is, a shape corresponding to a surface shape of the sample S) is recognized. Then, a sectional surface of the laser beam L or a movement distance of the sample ion S2 towards the ground electrode is corrected in accordance with the value of the three-dimensional shape of the sample support body 1A in a height direction (a Z direction). Accordingly, the three-dimensional surface mapping in the mass spectrometry is performed. Note that, the three-dimensional shape of the sample support body 1A, for example, may be recognized in advance before the mass spectrometry is performed.

In addition, in the sample support body 1B, the first substrate 2 and the second substrate 4 may have a curved shape. In this case, the entire sample support body 1B has a curved shape. That is, the frame 8, the adhesive layer 16, and the fixing member 9 also have a shape along the second substrate 4. However, it is sufficient that the first substrate 2 and the second substrate 4 in the effective region R have a curved shape, and the other portions (for example, a part or all of the frame 8, the adhesive layer 16, and the fixing member 9) may not have a curved shape. Even in such a case, as with the sample support body 1A having a curved shape, in the mass spectrometry of the sample S including the non-flat surface, it is possible to perform the three-dimensional surface mapping.

As illustrated in (b) of FIG. 12, the first substrate 2 and the second substrate 4 may have flexibility. Here, the entire sample support body 1A has flexibility. That is, the conductive layer 3 and the adhesive layer 5 also have flexibility. Note that, the flexibility is properties in which deformation (for example, bending or flexing) can be made. In addition, the flexibility of the first substrate 2 and the second substrate 4 can be controlled by changing the thickness of the second substrate 4. There is a case where the sample S includes the non-flat surface (refer to (a) of FIG. 12), and it is difficult to irradiate the non-flat surface with the laser beam L. According to the sample support body 1A having flexibility, even in such a case, in the mass spectrometry of the sample S including the non-flat surface, it is possible to perform the three-dimensional surface mapping.

Specifically, the sample support body 1A is disposed on the sample S such that the first substrate 2 and the second substrate 4 are along the non-flat surface of the sample S. Then, the component S1 of the sample S is moved to the first surface 2a side of the first substrate 2. At this time, as described above, for example, the 3D structure scanning using laser beam is performed, and thus, the three-dimensional shape of the sample support body 1A (that is, a shape corresponding to the surface shape of the sample S) is recognized. On the other hand, when the sample support body 1A is irradiated with the laser beam L, it is possible to irradiate the sample support body 1A in a flat plate-like shape (that is, the first substrate 2 and the second substrate 4) with the laser beam L. Then, the sectional surface of the laser beam L, or the movement distance of the sample ion S2 towards the ground electrode is corrected in accordance with the value of the three-dimensional shape of the sample support body 1A in the height direction (the Z direction). Accordingly, the three-dimensional surface mapping in the mass spectrometry is performed. In addition, in a case where the first substrate 2 and the second substrate 4 have flexibility, the shape of the sample support body 1A can be deformed along the surface of an arbitrary sample S, and thus, it is possible to perform the mass spectrometry (the three-dimensional surface mapping) with respect to the sample S including an arbitrary non-flat surface shape.

In addition, in the sample support body 1B, the first substrate 2 and the second substrate 4 may have flexibility. In this case, the entire sample support body 1B has flexibility. That is, frame 8, the adhesive layer 16 and the fixing member 9 also have flexibility. However, it is sufficient that the first substrate 2 and the second substrate 4 in the effective region R have flexibility, and the other portions (for example, a part of all of the frame 8, the adhesive layer 16, and the fixing member 9) may not have flexibility.

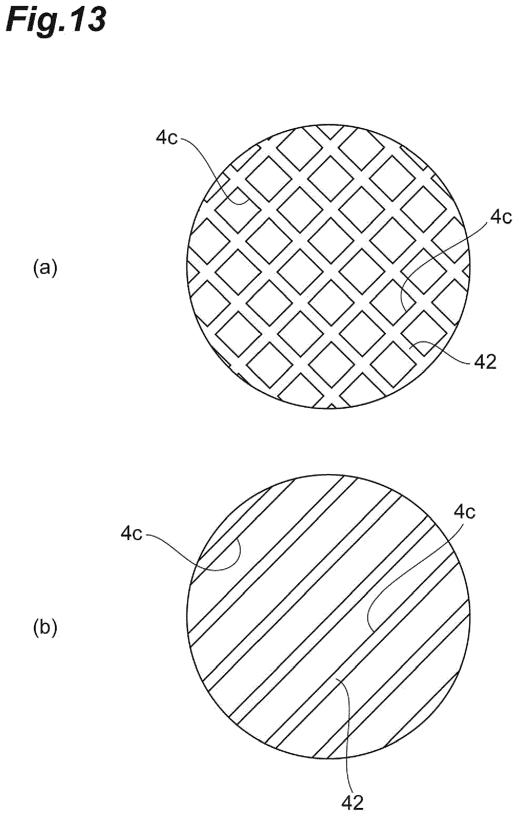

In addition, in the first embodiment and the second embodiment, an example is described in which the shape of the second through hole 4c when seen from the thickness direction is approximately in the shape of a hexagon, but the second through hole 4c may have various shapes. For example, as illustrated in (a) of FIG. 13, the shape of the second through hole 4c when seen from the thickness direction may be approximately in the shape of a quadrangle. That is, the mesh portion 42 may be formed by wall portions provided into the shape of a grid. In addition, as illustrated in (b) of FIG. 13, the shape of the second through hole 4c when seen from the thickness direction may be approximately in the shape of a rectangle extending in one direction. That is, the mesh portion 42 may be formed by a plurality of wall portions that are disposed at approximately regular intervals and are parallel to each other. In addition, the shape of the second through hole 4c when seen from the thickness direction may have a shape other than the shapes described above, and for example, may be approximately in the shape of a circle, or may be approximately in the shape of a triangle.

In addition, the second substrate 4 may not include the frame portion 41. Note that, as described above, in a case where the shape of the second through hole 4c is approximately in the shape of a rectangle extending in one direction (refer to (b) of FIG. 13), the second substrate 4 includes the frame portion 41.

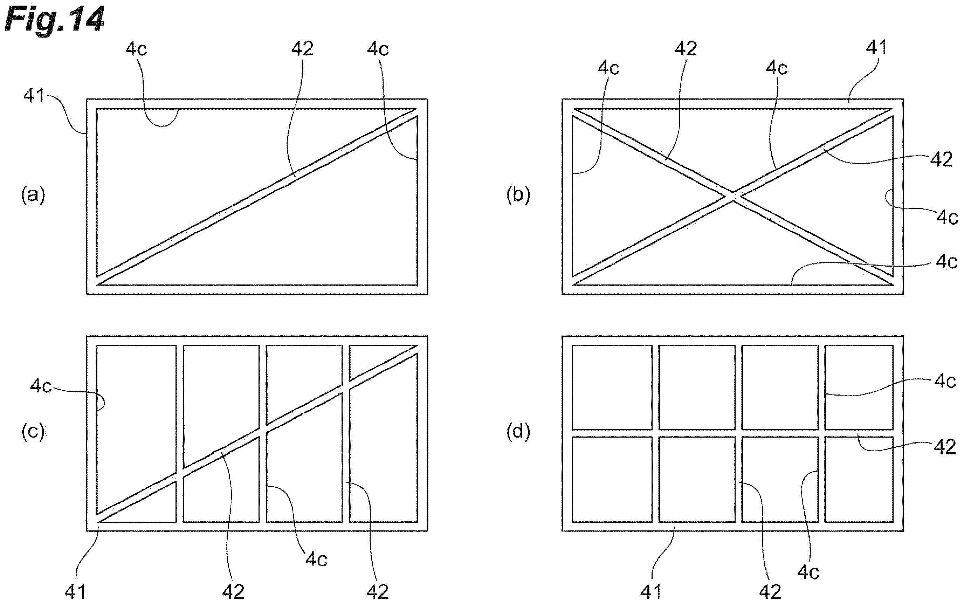

In addition, in the first embodiment and the second embodiment, an example is described in which the width of the second through hole 4c is approximately 1 µm to 1000 µm, the pitch between the respective second through holes 4c is approximately 1 µm to 1100 µm, but the width of the second through hole 4c and the pitch between the respective second through holes 4c may be approximately several mm to several cm. Specifically, the mesh portion 42 may be configured of one or a plurality of elongated beam portions. That is, as illustrated in (a) of FIG. 14, the mesh portion 42, for example, may be configured of one beam portion extending along a diagonal line of the frame portion 41. In this case, two second through holes 4c are formed on the second substrate 4. In addition, as illustrated in (b) of FIG. 14, the mesh portion 42, for example, may be configured of two beam portions extending along two diagonal lines of the frame portion 41. In this case, four second through holes 4c are formed on the second substrate 4. In addition, as illustrated in (c) of FIG. 14, the mesh portion 42 may be configured of one beam portion extending along one diagonal line of the frame portion 41 and a plurality of (here, three) beam portions extending along one side portion of the frame portion 41. In this case, eight second through holes 4c are formed on the second substrate 4. In addition, as illustrated in (d) of FIG. 14, the mesh portion 42 may be configured of a plurality of (here, three) beam portions extending along one side portion of the frame portion 41 and one beam portion extending along the other side portion intersecting with the one side portion of the frame portion 41. In this case, eight second through holes 4c are formed on the second substrate 4. In such a case, when the size of the first substrate 2 is increased, the flexing of the first substrate 2 can be suppressed by the second substrate 4.

In addition, even in the case of using the first substrate 2 and the second substrate 4 that are not adhesively fixed to each other as with the second embodiment, as with the first embodiment, in the fourth step, in a state where the first substrate 2 and the second substrate 4 are fixed to each other, the component S1 of the sample S may be ionized by irradiating the first surface 2a of the first substrate 2 with the laser beam L while applying a voltage to the conductive layer 3.

In addition, the sample support body 1A may include a plurality of measurement regions respectively including one second through hole 4c. Similarly, the sample support body 1B may include a plurality of measurement regions respectively including one second through hole 4c. That is, one measurement region for measuring a single sample S that is a measurement target may be configured to include a plurality of first through holes 2c of the first substrate 2 (the first layer) and one second through hole 4c of the second substrate 4 (the second layer). In the method for ionizing a sample, the sample support body 1A or the sample support body 1B is disposed on each of the samples S such that the fourth surface 4b of the second substrate 4 faces each of the samples S. Then, the sample support body 1A or the sample support body 1B is peeled off from each of the samples S. Accordingly, in each of the measurement regions, it is possible to attain and ionize the movement of the components S1 of the samples S different from each other.

In addition, the sample support body 1A may include a plurality of measurement regions respectively including a plurality of second through holes 4c. Similarly, the sample support body 1B may include a plurality of measurement regions respectively including a plurality of second through holes 4c. That is, one measurement region for measuring a single sample S that is a measurement target may be configured to include a plurality of first through holes 2c of the first substrate 2 (the first layer) and a plurality of second through holes 4c of the second substrate 4 (the second layer). In the method for ionizing a sample, the sample support body 1A or the sample support body 1B is disposed on each of the samples S such that the fourth surface 4b of the second substrate 4 faces each of the samples S. Then, the sample support body 1A or the sample support body 1B is peeled off from each of the samples S. Accordingly, in each of the measurement regions, it is possible to attain and ionize the movement of the components S1 of the samples S different from each other.

### [Third Embodiment]

### [Configuration of Sample Support Body]

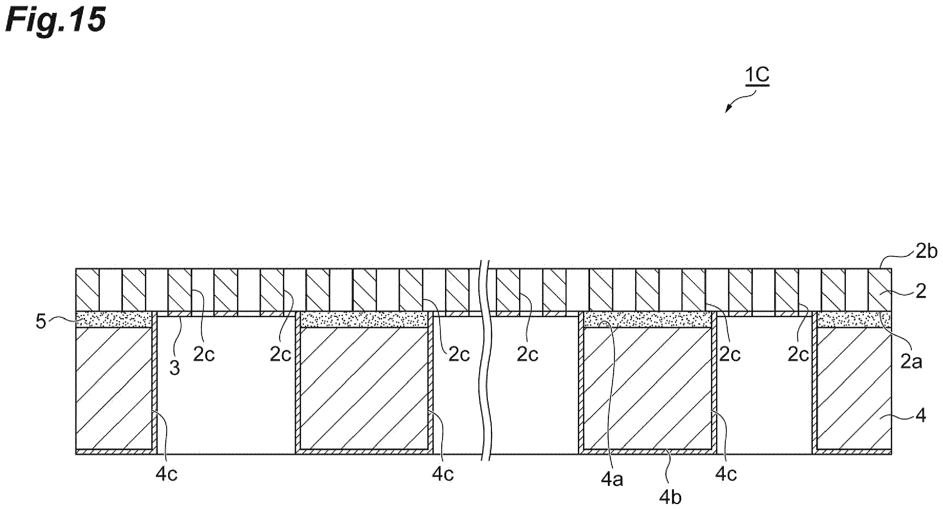

As illustrated in FIG. 15, a sample support body 1C of a third embodiment is mainly different from the sample support body 1A of the first embodiment, in that the second substrate 4 is provided on the first surface 2a of the first substrate 2. The other configuration of the sample support body 1C of the third embodiment is the same as that of the sample support body 1A of the first embodiment, and thus, the detailed description will be omitted.

As illustrated in FIG. 15, in the sample support body 1C, the second substrate 4 is provided on the first substrate 2 on the conductive layer 3 side. That is, the second substrate 4 is provided on the first surface 2a of the first substrate 2. The second substrate 4 is provided such that the third surface 4a faces the first surface 2a of the first substrate 2. The second substrate 4 is fixed to the first surface 2a of the first substrate 2 by the adhesive layer 5.

The conductive layer 3 is continuously (integrally) formed in a region corresponding to the second through hole 4c of the second substrate 4 in the first surface 2a of the first substrate 2, the inner surface of the second through hole 4c, and the fourth surface 4b of the second substrate 4. In the region corresponding to the second through hole 4c, the conductive layer 3 is provided on the peripheral portion of the first through hole 2c in the first surface 2a. That is, in the region corresponding to the second through hole 4c, the conductive layer 3 covers a portion of the first surface 2a of the first substrate 2 on which the first through hole 2c is not formed. That is, the conductive layer 3 is provided not to block the first through hole 2c. In the region corresponding to the second through hole 4c, each of the first through holes 2c is exposed to the second through hole 4c.

### [Method for Ionizing Sample]

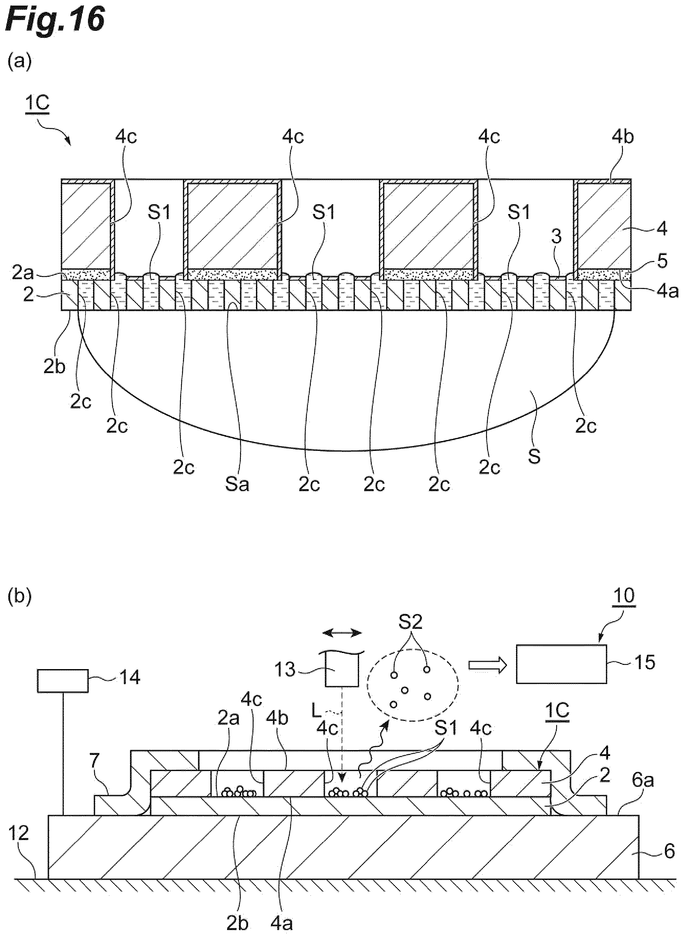

Next, a method for ionizing a sample, using the sample support body 1C, will be described with reference to FIG. 16. The method for ionizing a sample, using the sample support body 1C, is mainly different from the method for ionizing a sample, using the sample support body 1A, in that in the second step described above, the sample support body 1C is disposed on the sample S such that the second surface 2b of the first substrate 2 on a side opposite to the second substrate 4 faces the sample S, and in the fourth step described above, the first surface 2a of the first substrate 2 on the second substrate 4 side in the second through hole 4c of the second substrate 4 is irradiated with the laser beam L. In (b) of FIG. 16, the first through hole 2c, the conductive layer 3, and the adhesive layer 16 in the sample support body 1C are not illustrated.

As illustrated in (a) of FIG. 16, first, the sample S and the sample support body 1C are prepared (a first step), and then, the sample support body 1C is disposed on the sample S such that the second surface 2b of the first substrate 2 faces the sectional surface Sa of the sample S (a second step). The sample support body 1C is disposed on the sample S such that the second surface 2b of the first substrate 2 is in contact with the sectional surface Sa. Then, the component S1 of the sample S is moved from the second surface 2b side of the first substrate 2 towards the first surface 2a side of the first substrate 2 through the first through hole 2c, in accordance with a capillary action. The component S1 that is moved to the first surface 2a side of the first substrate 2 is remained on the first surface 2a side in the second through hole 4c by a surface tension.

Subsequently, the sample support body 1C is peeled off from the sample S (a third step). Subsequently, as illustrated in (b) of FIG. 16, the sample support body 1C is mounted on the mounting surface 6a of the glass slide (the mounting portion) 6 such that the second surface 2b of the first substrate 2 faces the mounting surface 6a. Subsequently, the sample support body 1C is fixed to the glass slide 6 by the tape 7. Specifically, the tape 7 is in contact with the conductive layer 3 on the fourth surface 4b of the second substrate 4 and is in contact with the mounting surface 6a of the glass slide 6, and thus, the sample support body 1C is fixed to the glass slide 6. The tape 7 may be a part of the sample support body 1C, or may be prepared separately from the sample support body 1C. In a case where the tape 7 is a part of the sample support body 1C (that is, the sample support body 1C includes the tape 7), for example, the tape 7 may be fixed in advance to the fourth surface 4b side in a peripheral portion of the second substrate 4. More specifically, the tape 7 may be fixed onto the conductive layer 3 in the peripheral portion of the second substrate 4.

Subsequently, in a state where the glass slide 6 and the sample support body 1C are fixed to each other, the glass slide 6 and the sample support body 1C are mounted on the support portion 12 (for example, the stage) of the mass spectrometry device 10. Subsequently, in a state where the component S1 of the sample S that is attached to the sample support body 1C is dried, a voltage is applied to the conductive layer 3 of the sample support body 1C (refer to FIG. 15) by the voltage application unit 14 of the mass spectrometry device 10 (a fourth step). Subsequently, the first surface 2a of the first substrate 2 in the second through hole 4c of the second substrate 4 is irradiated with the laser beam L by the laser beam irradiation unit 13 of the mass spectrometry device 10 (the fourth step).

As described above, the first surface 2a of the first substrate 2 is irradiated with the laser beam L while a voltage is applied to the conductive layer 3, and thus, the component S1 that is moved to the first surface 2a side of the first substrate 2 is ionized, and the sample ion S2 (the ionized component S1) is emitted. Each of the steps described above corresponds to the method for ionizing the sample S, using the sample support body 1C (here, as an example, a laser desorption/ionization method as a part of the mass spectrometry method).

The sample ion S2 that is emitted is moved towards a ground electrode (not illustrated) that is provided between the sample support body 1C and the ion detection unit 15 while being accelerated. Then, the sample ion S2 is detected by the ion detection unit 15 of the mass spectrometry device 10 (a fifth step). Each of the steps described above corresponds to the mass spectrometry method using the sample support body 1C.

As described above, the sample support body 1C includes the first substrate 2, the conductive layer 3 provided on the first surface 2a of the first substrate 2, and the second substrate 4 provided on the conductive layer 3. Then, the plurality of first through holes 2c extending in the thickness direction are formed on the first substrate 2, and the plurality of second through holes 4c that respectively extend in the thickness direction and are communicated with one or more first through holes 2c are formed on the second substrate 4. For this reason, in a case where the sample support body 1C is disposed on the sample S such that the second surface 2b of the first substrate 2 on a side opposite to the second substrate 4 faces the sample S, it is possible to move the component S1 of the sample S from the second surface 2b side towards the second substrate 4 side through the first through hole 2c by using a capillary action. Further, in a case where the first surface 2a in the second through hole 4c of the second substrate 4 is irradiated with the laser beam L from the second substrate 4 side, energy is transmitted to the component S1 of the sample S that is moved to the first surface 2a side via the conductive layer 3, and thus, the component S1 of the sample S can be ionized. In addition, as described above, the second substrate 4 is provided on the conductive layer 3. Accordingly, the first substrate 2 is reinforced by the second substrate 4, and thus, the breakage of the first substrate 2 when the sample support body 1C is peeled off from the sample S is suppressed. Accordingly, according to the sample support body 1C, it is possible to suppress the breakage of the sample support body 1C.

In addition, in the method for ionizing a sample, using the sample support body 1C, in a case where the sample support body 1C is disposed on the sample S such that the second surface 2b of the first substrate 2 on a side opposite to the second substrate 4 faces the sample S, the component S1 of the sample S is moved from the second surface 2b side towards the second substrate 4 side through the first through hole 2c. Further, in a case where the sample support body 1C is peeled off from the sample S, and then, the first surface 2a of the first substrate 2 on the second substrate 4 side in the second through hole 4c of the second substrate 4 is irradiated with the laser beam L while a voltage is applied to the conductive layer 3, energy is transmitted to the component S1 of the sample S that is moved to the first surface 2a side of the first substrate 2. Accordingly, the component S1 of the sample S is ionized. Here, the second substrate 4 is provided on the conductive layer 3. Accordingly, the first substrate 2 is reinforced by the second substrate 4, and thus, the breakage of the first substrate 2 when the sample support body 1C is peeled off from the sample S is suppressed. Accordingly, according to the method for ionizing a sample, it is possible to suppress the breakage of the sample support body 1C.

In addition, in the method for ionizing a sample, as with the method for ionizing a sample, using the sample support body 1B, the height from the support portion 12 of the first surface 2a that is irradiated with the laser beam L is the same as that of a case where the sample support body 1C does not include the second substrate 4. Accordingly, the laser beam L can be applied while the first substrate 2 is reinforced by the second substrate 4, in the same condition as that of a case where the sample support body 1C does not include the second substrate 4. That is, the height of the light condensing position of the laser beam L may be adjusted again. Accordingly, it is possible to more simply ionize the sample S.

In addition, as with the sample support body 1B, the sample support body 1C may further include the frame 8 (refer to FIG. 9) and the fixing member 9, and may not include the adhesive layer 5 (refer to FIG. 15). That is, in the sample support body 1C, as with the sample support body 1B, the first substrate 2 and the second substrate 4 may be separable.

### [Fourth Embodiment]

### [Configuration of Sample Support Body]

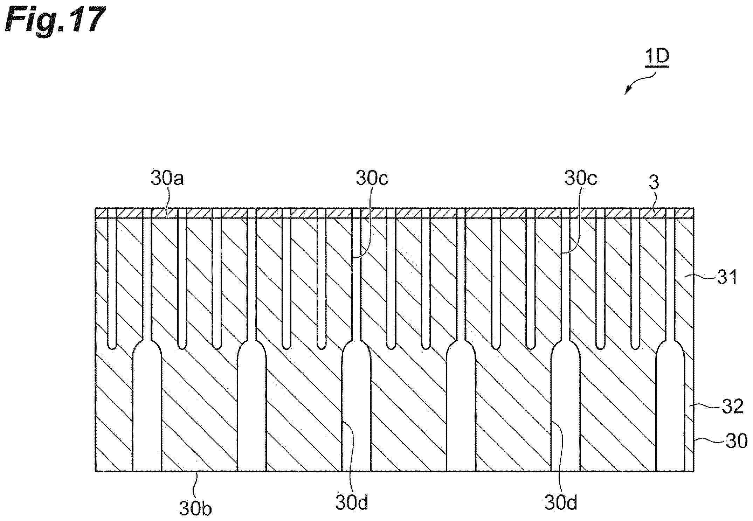

As illustrated in FIG. 17, a sample support body ID of a fourth embodiment is mainly different from the sample support body 1A of the first embodiment, in that the sample support body ID is configured of one substrate 30 and the conductive layer 3. The other configuration of the sample support body ID of the fourth embodiment is the same as that of the sample support body 1A of the first embodiment, and thus, the detailed description will be omitted.

The sample support body ID includes the substrate 30 and the conductive layer 3. The substrate 30 includes a first layer 31 and a second layer 32. The first layer 31 includes a surface 30a on a side opposite to the second layer 32. The second layer 32 includes a surface 30b on a side opposite to the first layer 31. In the sample support body 1D, the first layer 31 and the second layer 32 are integrally formed of an identical material. The first layer 31 and the second layer 32, for example, is an alumina porous film that is formed by performing anodizing treatment with respect to an identical A1 substrate, and by peeling off a surface portion that is oxidized from the A1 substrate. Note that, as with the first substrate 2 of the sample support body 1A, the first layer 31 and the second layer 32 may be formed by anodizing a valve metal other than Al, such as tantalum (Ta), niobium (Nb), titanium (Ti), hafnium (Hf), zirconium (Zr), zinc (Zn), tungsten (W), bismuth (Bi), and antimony (Sb), or may be formed by anodizing silicon (Si).

The thickness of the first layer 31, for example, is approximately 1 µm to 50 µm. The shape of a first through hole 30c when seen from the thickness direction is approximately in the shape of a circle. The width of the first through hole 30c, for example, is approximately 1 nm to 700 nm. A pitch between the respective first through holes 30c, for example, is approximately 100 nm. The thickness of the second layer 32, for example, is approximately 1 µm to 1000 µm. The shape of a second through hole 30d when seen from the thickness direction is approximately in the shape of a circle. The width of the second through hole 30d, for example, is approximately 1 nm to 1000 nm. A pitch between the respective second through holes 30d, for example, is approximately 300 nm. Here, one second through hole 30d is communicated with one first through hole 30c. The pitch between the respective second through holes 30d is larger than the pitch between the respective first through holes 30c, and thus, in the plurality of first through holes 30c, only a part of the first through holes 30c disposed at the pitch between the respective second through holes 30d is communicated with the second through hole 30d. The other first through holes 30c are blocked by the second substrate 4.

As described above, the first layer 31 and the second layer 32 are integrally formed of an identical material. In this case, the structure of the sample support body 1D is simplified. In addition, in this embodiment, as an example, the identical material is an anodized valve metal or anodized silicon. In this case, it is possible to easily obtain a structure in which the first layer 31 and the second layer 32 are integrally formed, by an anodizing process.

### [Manufacturing Method of Sample Support Body]

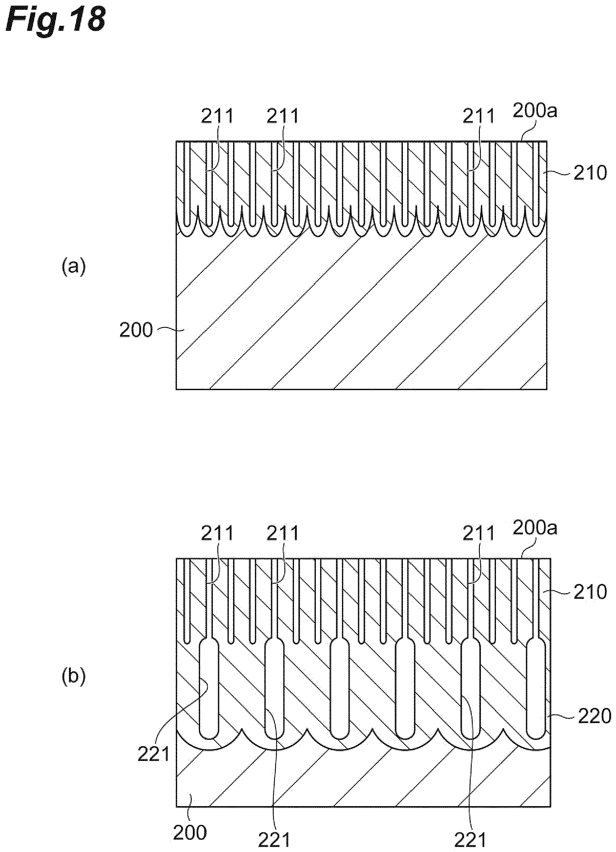

Next, a manufacturing method of the sample support body 1D will be described with reference to FIG. 18. First, as illustrated in (a) of FIG. 18, a base substrate 200 is anodized, and thus, a first anodic oxide film (an alumina porous film) 210 is formed in which a plurality of first concave portions (concave portions to be the first through holes 30c) 211 are provided on a surface 200a of the base substrate 200. Specifically, first, the base substrate 200 is dipped in an electrolytic solution. Subsequently, a first voltage having a predetermined size (for example, approximately 40 V) is applied to the base substrate 200. The size of the applied voltage is determined in accordance with the electrolytic solution to be used. In a case where the first voltage is applied to the base substrate 200 in a state of being dipped in the electrolytic solution, the first anodic oxide film 210 is formed on the surface 200a. The material of the base substrate 200, for example, is aluminum (Al) having a purity of greater than or equal to 99.9% (3N).

Subsequently, as illustrated in (b) of FIG. 18, the base substrate 200 on which the first anodic oxide film 210 is formed is anodized, and thus, a second anodic oxide film (an alumina porous film) 220 is formed on which a plurality of second concave portions (concave portions to be the second through holes 30d) 221 respectively communicated with one first concave portion 211 are provided. Specifically, a second voltage having a predetermined size (for example, approximately 120 V) is applied to the base substrate 200 on which the first anodic oxide film 210 is formed. In a case where the second voltage is applied to the base substrate 200 in a state of being dipped in the electrolytic solution, the second anodic oxide film 220 continuous to the first anodic oxide film 210 is formed. Note that, one second concave portion 221 may be communicated with a plurality of first concave portions 211.

Subsequently, the first anodic oxide film 210 and the second anodic oxide film 220 are peeled off from the base substrate 200, and thus, the first layer 31 and the second layer 32 are obtained (refer to FIG. 17). Subsequently, the conductive layer 3 is provided on a peripheral portion of the first through hole 30c in the surface 30a of the first layer 31. The conductive layer 3 is formed not to block the first through hole 30c. As described above, the sample support body ID is manufactured.

### [Method for Ionizing Sample]

The method for ionizing the sample S, using the sample support body 1D, is the same as the method for ionizing the sample S, using the sample support body 1A.

### [Fifth Embodiment]

### [Configuration of Sample Support Body]

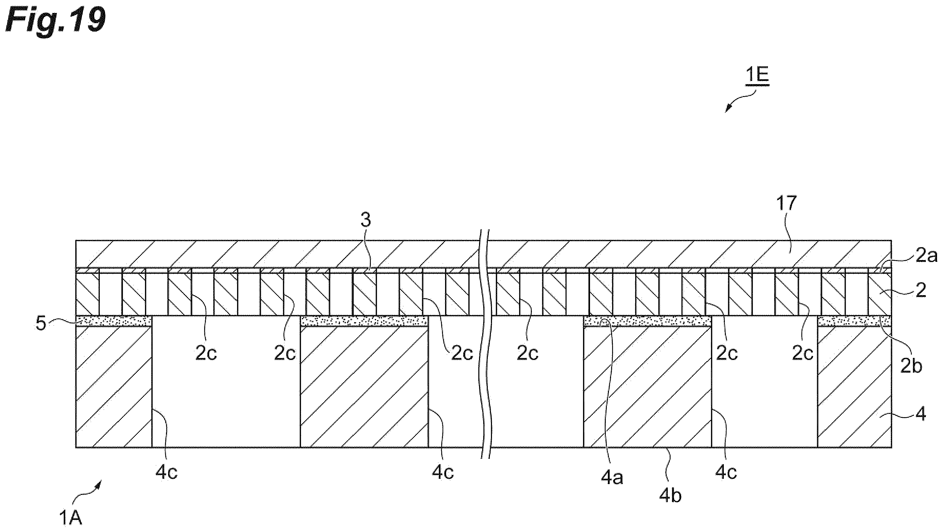

As illustrated in FIG. 19, a sample support body IE of a fifth embodiment is mainly different from the sample support body 1A of the first embodiment, in that the first substrate 2 and the second substrate 4 have flexibility, and a third substrate 17 (a third layer) is further provided. The other configuration of the sample support body IE of the fifth embodiment is the same as that of the sample support body 1A of the first embodiment, and thus, the detailed description will be omitted.

The sample support body IE includes the third substrate 17, in addition to the sample support body 1A described above. Here, the sample support body 1A has flexibility (refer to (b) of FIG. 12). The third substrate 17 is provided on the first substrate 2 on a side opposite to the second substrate 4. That is, the third substrate 17 is provided on the surface of the conductive layer 3. The third substrate 17 has approximately the same outer shape as that of the first substrate 2 and the second substrate 4 when seen from the thickness direction. The thickness of the third substrate 17, for example, is approximately 0.5 µm to 10 mm.

The third substrate 17 is formed of a shape-memory material. The third substrate 17, for example, is a shape-memory polymer. Specifically, the third substrate 17, for example, is a smart polymer (NIMS). The material of the third substrate 17, for example, is a material having responsiveness with respect to a temperature. For example, in a case where a predetermined shape is memorized by the third substrate 17 in a temperature condition of 60°C, and the third substrate 17 is deformed, and then, the third substrate 17 is exposed to an environment of 60°C, the third substrate 17 returns again to the predetermined shape. Note that, the third substrate 17 may have responsiveness with respect to heat, ph, light, ions, a magnetic field, and the like.

As described above, the sample support body 1E further includes the third substrate 17 provided on the first substrate 2 on a side opposite to the second substrate 4, the first substrate 2 and the second substrate 4 have flexibility, and the third substrate 17 is formed of the shape-memory material. There is a case where the sample S includes a non-flat surface, and it is required to image the three-dimensional surface distribution of the molecules configuring the sample S. On the other hand, there is a case where it is difficult to irradiate the non-flat surface with the laser beam L. In such a case, the sample support body IE is disposed on the sample S such that the fourth surface 4b of the second substrate 4 on a side opposite to the first substrate 2 faces the sample S and the sample support body IE is along the surface of the sample S, and thus, it is possible to memorize the surface shape of the sample S by the third substrate 17 while moving the component S1 of the sample S to the first surface 2a side of the first substrate 2. Then, the third substrate 17 is peeled off from the first substrate 2, and thus, the surface shape of the sample S that is memorized by the third substrate 17 can be recognized. In addition, the first substrate 2 and the second substrate 4 are returned to a flat plate-like shape, and then, the first surface 2a of the first substrate 2 is irradiated with the laser beam L, and thus, the component S1 of the sample S is ionized, and a two-dimensional distribution of the ionized component S1 (the sample ion S2) can be acquired. Then, it is possible to acquire a three-dimensional surface distribution of the sample ion S2 by synthesizing the surface shape of the sample S and a two-dimensional distribution of the sample ion S2.

### [Method for Ionizing Sample]

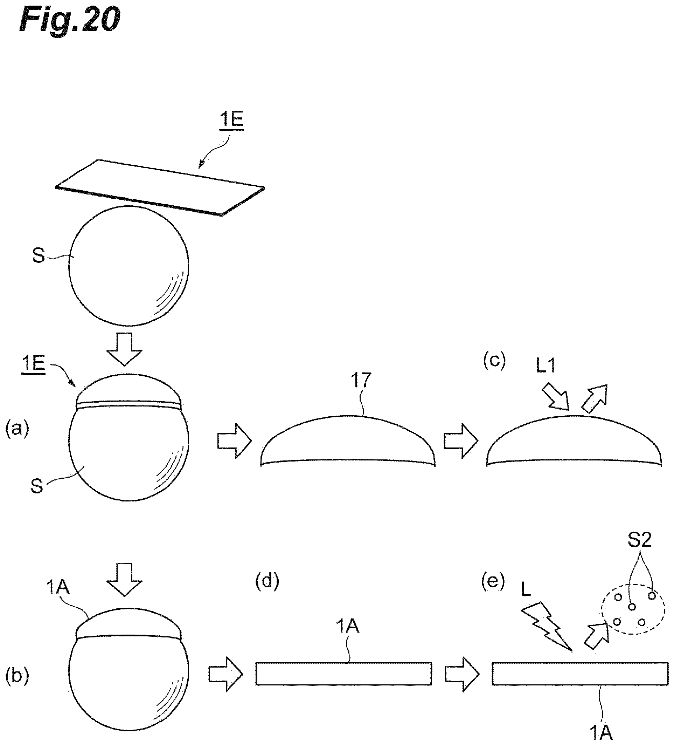

Next, a method for ionizing a sample, using the sample support body IE, will be described. As illustrated in FIG. 20, first, the sample S including a non-flat surface and the sample support body IE are prepared (a first step). Subsequently, the sample support body 1E is disposed on the sample S such that the fourth surface 4b of the second substrate 4 on a side opposite to the first substrate 2 (refer to FIG. 19) faces the sample S and the sample support body 1E is along the surface of the sample S (a second step). The sample support body 1E is disposed on the sample S such that the fourth surface 4b of the second substrate 4 is in contact with the sample S and is along the surface of the sample S.

Subsequently, the surface shape of the sample S is memorized by the third substrate 17 (a third step). Specifically, as illustrated in (a) of FIG. 20, in a state where the sample support body IE is disposed on the sample S to be along the surface of the sample S, the temperature of the third substrate 17 is set to a predetermined temperature such that the surface shape of the sample S is memorized by the third substrate 17. Subsequently, the sample support body IE is peeled off from the sample S (a fourth step). Specifically, first, as illustrated in (b) of FIG. 20, the third substrate 17 is peeled off from the first substrate 2. At this time, the component S1 that is moved to the first surface 2a side of the first substrate 2 is remained on the first surface 2a side by a surface tension. After that, the first substrate 2 and the second substrate 4 are peeled off from the sample S. In a case where the third substrate 17 is peeled off from the first substrate 2, the surface shape of the sample S that is memorized by the third substrate 17 is recognized (a fifth step). For example, as illustrated in (c) of FIG. 20, for example, 3D structure scanning using the laser beam L1 is performed, and thus, a three-dimensional shape of the third substrate 17 is recognized. On the other hand, as illustrated in (d) of FIG. 20, in a case where the first substrate 2 and the second substrate 4 (that is, the sample support body 1A that is formed by the peeling of the third substrate 17 from the sample support body 1E) are returned to a flat plate-like shape at the time of being peeled off from the sample S (a sixth step). Then, as illustrated in (e) of FIG. 20, in a state where the component S1 of the sample S that is attached to the sample support body 1A is dried, the first surface 2a of the first substrate 2 is irradiated with the laser beam L while a voltage is applied to the conductive layer 3. Accordingly, the component S1 that is moved to the first surface 2a side of the first substrate 2 is ionized, and the sample ion S2 (the ionized component S1) is emitted. Each of the steps described above corresponds to the method for ionizing the sample S, using the sample support body IE (here, as an example, a laser desorption/ionization method as a part of the mass spectrometry method).

The sample ion S2 that is emitted is detected by the ion detection unit of the mass spectrometry device, and the two-dimensional distribution of the sample ion S2 is acquired (a seventh step). Subsequently, the three-dimensional surface distribution of the sample ion S2 is acquired by synthesizing the three-dimensional shape of the third substrate 17 that is detected by the 3D structure scanning (that is, the surface shape of the sample S) and the two-dimensional distribution of the sample ion S2 that is obtained by the mass spectrometry (here, TOF-MS) (an eighth step). Each of the steps described above corresponds to the mass spectrometry method using the sample support body IE.

As described above, in the mass spectrometry method using the sample support body IE, the sample S includes the non-flat surface. In addition, the sample support body IE includes the third substrate 17 provided on the first substrate 2 on a side opposite to the second substrate 4. In a case where the sample support body IE is disposed on the sample S such that the fourth surface 4b of the second substrate 4 on a side opposite to the first substrate 2 faces the sample S and the sample support body IE is along the non-flat surface of the sample S, the component S1 of the sample S is moved to the first surface 2a side of the first substrate 2. In addition, in a state where the sample support body IE is disposed on the sample S such that the sample support body IE is along the surface of the sample S, the surface shape of the sample S is memorized by the third substrate 17. Then, the surface shape of the sample S that is memorized by the third substrate 17 is recognized. On the other hand, in a case where the first substrate 2 and the second substrate 4 are formed into a flat plate-like shape, and then, the first surface 2a of the first substrate 2 is irradiated with the laser beam L while a voltage is applied to the conductive layer 3, energy is transmitted to the component S1 of the sample S that is moved to the first surface 2a side of the first substrate 2. Accordingly, the component S1 of the sample S is ionized. Then, the component S1 of the sample S that is ionized (the sample ion S2) is detected, and the two-dimensional distribution of the sample ion S2 is acquired. Further, the three-dimensional surface distribution of the sample ion S2 is acquired by synthesizing the surface shape of the sample S and the two-dimensional distribution of the sample ion S2. As described above, according to the mass spectrometry method using the sample support body IE, it is possible to acquire the three-dimensional surface distribution of the component of the sample including the non-flat surface while suppressing the breakage of the sample support body IE. In addition, according to the mass spectrometry method using the sample support body 1E, it is possible to simultaneously perform the recognition of the surface shape of the sample S (the fifth step), the ionization of the component S1 of the sample S (the sixth step), and the acquisition of the two-dimensional distribution of the sample ion S2 (the seventh step). Accordingly, it is possible to improve a working efficiency of the mass spectrometry.

The mass spectrometry method that is capable of acquiring the three-dimensional surface distribution, for example, is effective in the following fields. For example, in the medical field, it is possible to acquire a three-dimensional surface distribution of the surface of the internal organ or the surface of a wound in order to grasp a progress status of skin inflammation, cancer, or the like, or to specify a site. In addition, for example, in the biological field, it is possible to acquire a three-dimensional surface distribution on the body surface of a living object. In addition, in the art field, it is possible to acquire a three-dimensional surface distribution on the surface of antiquities in order to specify a dye or a fiber of the surface of the antiquities. In addition, in the agricultural field, the concentration of residual agricultural chemicals on the surface of agricultural products is mapped, and thus, it is possible to contribute to the improvement of a washing method. In addition, in the field of fisheries, it is possible to acquire a three-dimensional surface distribution on the body surface of a fry in order to determine the thinning of aquaculture or to improve a living environment.

### [Modification Example]

As described above, the embodiments of the present disclosure have been described, but the present disclosure is not limited to the embodiments described above, and the present disclosure can be variously modified within a range not departing from the gist thereof.

The conductive layer 3 may not be provided on the inner surface of the first through hole 2c as described in the embodiments described above, or may be provided on the inner surface of the first through hole 2c.

The first substrate 2 or the substrate 30 may have conductivity, and in the mass spectrometry method, the first substrate 2 on a side opposite to the second substrate 4 (the first surface 2a) or the surface 30a of the substrate 30 may be irradiated with the laser beam L while a voltage is applied thereto. In a case where the first substrate 2 or the substrate 30 has conductivity, in the sample support bodies 1A, 1B, 1C, 1D, and 1E, it is possible to omit the conductive layer 3 and to obtain the same effects as those of the case of using the sample support bodies 1A, 1B, 1C, 1D, and 1E including the conductive layer 3 described above. Note that, applying a voltage to the first surface 2a of the first substrate 2 or the surface 30a of the substrate 30 indicates that a voltage is applied to the conductive layer 3 in a case where the sample support bodies 1A, 1B, 1C, 1D, and IE include the conductive layer 3, and indicates that a voltage is applied to the first surface 2a of the first substrate 2 or the surface 30a of the substrate 30 in a case where the first substrate 2 or the substrate 30 has conductivity. Similarly, irradiating the first surface 2a of the first substrate 2 or the surface 30a of the substrate 30 with the laser beam L indicates that the conductive layer 3 is irradiated with the laser beam L in a case where the sample support bodies 1A, 1B, 1C, 1D, and 1E include the conductive layer 3, and indicates that the first surface 2a of the first substrate 2 or the surface 30a of the substrate 30 is irradiated with the laser beam L in a case where the first substrate 2 or the substrate 30 has conductivity.

An example has been described in which the material of the second substrate 4 is SUS, but the material of the second substrate 4 may be a metal having high workability or various metals that can be etched. In addition, in a case where the laser beam L is applied in a state where the first substrate 2 is not peeled off from the second substrate 4, a material having resistance with respect to the laser beam L is preferable as the material of the second substrate 4. For example, the material of the second substrate 4 may be ceramics, quartz, a resin, or the like.

An example has been described in which the component S1 of the sample S is moved from the fourth surface 4b side of the second substrate 4 towards the first substrate 2 side through the second through hole 4c, in accordance with a capillary action, but the component S1 of the sample S may be moved from the fourth surface 4b side of the second substrate 4 towards the first substrate 2 side through the second through hole 4c, regardless of the capillary action. For example, the entire sample support body 1A is moderately pressurized towards the sample S, and thus, the component S1 of the sample S may be moved from the fourth surface 4b side of the second substrate 4 towards the first substrate 2 side through the second through hole 4c.

There is a case where a capillary action does not occur in the second substrate 4, in accordance with a combination of the surface tension, a liquid density, and the temperature (or the vapor pressure) of the component S1 of the sample S, the width W1 of the second through hole 4c of the second substrate 4, the thickness of the second substrate 4 (that is, the length of the second through hole 4c), and the like. In such a case, for example, the entire sample support body 1A is moderately pressurized towards the sample S, and thus, it is possible to move the component S1 of the sample S from the fourth surface 4b side of the second substrate 4 towards the third surface 4a side through the second through hole 4c. Then, the component S1 of the sample S is brought into contact with the second surface 2b of the first substrate 2, and thus, it is possible to move the component S1 of the sample S from the second surface 2b side of the first substrate 2 towards the first surface 2a side through the first through hole 2c, in accordance with a capillary action. As described above, even in a case where a capillary action does not occur in the second through hole 4c, it is possible to allow the component S1 of the sample S to reach the first surface 2a side of the first substrate 2. Note that, as an example, in a case where the thickness of the second substrate 4 is approximately 100 µm, the component S1 of the sample S is pure water, a contact angle between the component S1 of the sample S and the second substrate 4 is 20°, and the width W1 of the second through hole 4c is less than 280 µm, the component S1 of the sample S is moved from the fourth surface 4b side second substrate 4 towards the third surface 4a side through the second through hole 4c, in accordance with a capillary action.

In the sample support body 1B, the aspect is not limited insofar as the first substrate 2 and the second substrate 4 can be fixed. For example, the fixing member 9 may not be in the shape of a rectangular frame when seen from the thickness direction. The fixing member 9, for example, may be configured to grip the first substrate 2 and the second substrate 4, in an arbitrary position of the edge portion of the first substrate 2 and the second substrate 4. In addition, the sample support body 1B may not include the fixing member 9. For example, the first substrate 2 and the second substrate 4 may be gripped by the fingers of a measurer, or the like. In addition, in the mass spectrometry method of the sample S, using the sample support body 1B, the first substrate 2 may be peeled off from the second substrate 4 in a state where the second substrate 4 is disposed on the sample S, after the component S1 of the sample S is moved to the first surface 2a side of the first substrate 2 through the second substrate 4.

The sample support bodies 1A, 1C, 1D, and 1E may include the frame 8. The sample support body 1B may not include the frame 8.

In the mass spectrometry device 10, the laser beam irradiation unit 13 may collectively apply the laser beam L with respect to the first surface 2a of the first substrate 2 (or a region corresponding to the effective region R), and the ion detection unit 15 may detect the sample ion S2 while maintaining two-dimensional information of the region. That is, the mass spectrometry device 10 may be a projection mass spectrometry device.

An example has been described in which the opening 8a of the frame 8 when seen from the thickness direction is in the shape of a circle, but the opening 8a may have various shapes. The shape of the opening 8a of the frame 8, for example, may be a rectangular shape.

An example has been described in which the sample support bodies 1A, 1B, 1C, 1D, and 1E are mounted on the glass slide 6, but the sample support bodies 1A, 1B, 1C, 1D, and 1E may be directly mounted on the support portion 12 of the mass spectrometry device 10.

In addition, the application of the sample support bodies 1A, 1B, 1C, 1D, and 1E is not limited to the ionization of the sample S by the irradiation of the laser beam L. The sample support bodies 1A, 1B, 1C, 1D, and 1E may be used in the ionization of the sample S by the irradiation of energy rays other than the laser beam L (for example, an ion beam, an electron beam, and the like).

The sample support bodies 1A, 1B, 1C, 1D, and 1E may be fixed to the glass slide 6 by means other than the tape 7 (for example, means using an adhesive agent, a fixing tool, or the like). In addition, a voltage may be applied to the conductive layer 3 without using the mounting surface 6a of the glass slide 6 and the tape 7. In this case, the glass slide 6 and the tape 7 may not have conductivity.

The method for ionizing a sample described above can be used not only in the mass spectrometry of the molecules configuring the sample S, but also in other measurements and tests such as ion mobility measurement.

The sample S may be a dry sample. In this case, in order to move the component S1 of the sample S to the first surface 2a side of the first substrate 2 by a capillary action, for example, a solvent (for example, an acetonitrile mixed liquid, acetone, or the like) may be added to the sample S.

### Reference Signs List

1A, 1B, 1C, 1D, 1E: sample support body, 2: first substrate (first layer), 2a: first surface (surface), 2c, 30c: first through hole, 3: conductive layer, 4: second substrate (second layer), 4b: fourth surface (surface), 4c, 30d: second through hole, 5: adhesive layer, 8: frame (frame body), 9: fixing member, 17: third substrate (third layer), 30a: surface, 30b: surface, 31: first layer, 32: second layer, L: laser beam (energy ray), S: sample, S1: component, S2: sample ion.

## Claims

1. A sample support body for ionizing sample, comprising:
a first layer formed with a plurality of first through holes;
a conductive layer provided not to block the first through hole on a surface of the first layer; and
a second layer provided on the first layer on a side opposite to the conductive layer and formed with a plurality of second through holes,
wherein the plurality of first through holes and the plurality of second through holes extend in a thickness direction of the first layer and the second layer,
each of the plurality of second through holes is communicated with one or more first through holes of the plurality of first through holes,
a width of the first through hole is smaller than a width of the second through hole, and
an opening rate of the first through hole is less than an opening rate of the second through hole.

2. The sample support body according to claim 1, further comprising:
a frame body provided on the first layer on a side opposite to the second layer and fixed to a peripheral portion of the first layer.

3. The sample support body according to claim 1 or 2,
wherein the width of the first through hole is 1 nm to 700 nm, and
a thickness of the first layer is 1 µm to 50 µm.

4. The sample support body according to any one of claims 1 to 3,
wherein the width of the second through hole is 1 µm to 1000 µm, and
a thickness of the second layer is 1 µm to 3000 µm.

5. The sample support body according to any one of claims 1 to 4,
wherein the first layer and the second layer are formed separately from each other.

6. The sample support body according to claim 5, further comprising:
a fixing member that is provided on an outer peripheral portion of the first layer and the second layer and grips the first layer and the second layer.

7. The sample support body according to claim 5, further comprising:
an adhesive layer that is provided between the first layer and the second layer and joins the first layer and the second layer.

8. The sample support body according to any one of claims 1 to 4,
wherein the first layer and the second layer are integrally formed of an identical material.

9. The sample support body according to claim 8,
wherein the material is an anodized valve metal or anodized silicon .

10. The sample support body according to any one of claims 1 to 9,
wherein the first layer and the second layer have flexibility.

11. The sample support body according to any one of claims 1 to 10,
wherein the first layer and the second layer have a curved shape.

12. A sample support body for ionizing a sample, comprising:
a first layer having conductivity formed with a plurality of first through holes; and
a second layer provided on one side of the first layer and formed with a plurality of second through holes,
wherein the plurality of first through holes and the plurality of second through holes extend in a thickness direction of the first layer and the second layer,
each of the plurality of second through holes is communicated with one or more first through holes of the plurality of first through holes,
a width of the first through hole is smaller than a width of the second through hole, and
an opening rate of the first through hole is less than an opening rate of the second through hole.

13. The sample support body according to any one of claims 1 to 12, further comprising:
a third layer provided on the first layer on a side opposite to the second layer,
wherein the first layer and the second layer have flexibility, and
the third layer is formed of a shape-memory material.

14. A sample support body for ionizing a sample,
a first layer formed with a plurality of first through holes;
a conductive layer provided not to block the first through hole on a surface of the first layer; and
a second layer provided on the conductive layer and formed with a plurality of second through holes,
wherein the plurality of first through holes and the plurality of second through holes extend in a thickness direction of the first layer and the second layer,
each of the plurality of second through holes is communicated with one or more first through holes of the plurality of first through holes,
a width of the first through hole is smaller than a width of the second through hole, and
an opening rate of the first through hole is less than an opening rate of the second through hole.

15. A method for ionizing a sample, comprising:
a first step of preparing a sample and the sample support body according to any one of claims 1 to 11;
a second step of disposing the sample support body on the sample such that a surface of the second layer on a side opposite to the first layer faces the sample;
a third step of peeling off the sample support body from the sample; and
a fourth step of ionizing a component of the sample by irradiating the surface of the first layer with an energy ray while applying a voltage to the conductive layer.

16. The method for ionizing a sample according to claim 15,
wherein the first layer and the second layer are formed separately from each other, and
in the fourth step, the component of the sample is ionized by irradiating the surface of the first layer with the energy ray while applying a voltage to the conductive layer, in a state in which the first layer and the second layer are fixed to each other.

17. The method for ionizing a sample according to claim 15,
wherein the first layer and the second layer are formed separately from each other, and
in the third step, the first layer is peeled off from the second layer, after the sample support body is peeled off from the sample.

18. The method for ionizing a sample according to claim 15,
wherein the first layer and the second layer are integrally formed of an identical material.

19. The method for ionizing a sample according to claim 18,
wherein the material is an anodized valve metal or anodized silicon .

20. The method for ionizing a sample according to any one of claims 15 to 19,
wherein the width of the second through hole is larger than a spot diameter of the energy ray.

21. The method for ionizing a sample according to any one of claims 15 to 20,
wherein in the third step, the sample support body is peeled off from the sample, before the component attached to the first layer is dried.

22. A method for ionizing a sample, comprising:
a first step of preparing a sample and the sample support body according to claim 12;
a second step of disposing the sample support body on the sample such that a surface of the second layer on a side opposite to the first layer faces the sample;
a third step of peeling off the sample support body from the sample; and
a fourth step of ionizing a component of the sample by irradiating a surface of the first layer on a side opposite to the second layer with an energy ray while applying a voltage to the first layer.

23. A method for ionizing a sample, comprising:
a first step of preparing a sample and the sample support body according to claim 14;
a second step of disposing the sample support body on the sample such that a surface of the first layer on a side opposite to the second layer faces the sample;
a third step of peeling off the sample support body from the sample; and
a fourth step of ionizing a component of the sample by irradiating a surface of the first layer on the second layer side with an energy ray while applying a voltage to the conductive layer.

24. A mass spectrometry method, comprising:
each of the steps of the method for ionizing a sample according to any one of claims 15 to 23; and
a fifth step of detecting the component ionized in the fourth step.

25. A mass spectrometry method, comprising:
a first step of preparing a sample including a non-flat surface and the sample support body according to claim 13;
a second step of disposing the sample support body on the sample such that a surface of the second layer on a side opposite to the first layer faces the sample and the sample support body is along the non-flat surface of the sample;
a third step of memorizing a surface shape of the sample by the third layer;
a fourth step of peeling off the sample support body from the sample;
a fifth step of recognizing the surface shape of the sample memorized by the third layer;
a sixth step of ionizing a component of the sample by irradiating the first layer on a side opposite to the second layer with an energy ray while applying a voltage to the first layer, after the first layer and the second layer are formed into a flat plate-like shape;
a seventh step of detecting the ionized component and acquiring a two-dimensional distribution of the ionized component; and
an eighth step of acquiring a three-dimensional surface distribution of the ionized component by synthesizing the surface shape of the sample and the two-dimensional distribution of the ionized component.
